(19) Europäisches Patentamt European Patent Office Office européen des brevets

(11) **EP 4 685 931 A1**

(12) **EUROPEAN PATENT APPLICATION**
published in accordance with Art. 153(4) EPC

(43) Date of publication:
**28.01.2026 Bulletin 2026/05**

(21) Application number: **24894531.3**

(22) Date of filing: **15.11.2024**

(51) International Patent Classification (IPC):
**H01M 10/6551** (2014.01) **H01M 10/6556** (2014.01)
**H01M 10/625** (2014.01) **H01M 50/211** (2021.01)

(52) Cooperative Patent Classification (CPC):
**H01M 10/625; H01M 10/6551; H01M 10/6556;
H01M 50/211;** Y02E 60/10

(86) International application number:
**PCT/KR2024/018099**

(87) International publication number:
**WO 2025/110638 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.11.2023 KR 20230161479**

(71) Applicant: **LG Energy Solution, Ltd.
Seoul 07335 (KR)**

(72) Inventors:
• **CHUNG, Won-Sik
  Daejeon 34122 (KR)**
• **KIM, Min-Sung
  Daejeon 34122 (KR)**

(74) Representative: **Plasseraud IP
104 Rue de Richelieu
CS92104
75080 Paris Cedex 02 (FR)**

(54) **BATTERY MODULE AND BATTERY PACK**

(57)    According to one aspect of the present disclosure, a battery module with an improved stability against swelling is disclosed. A battery module according to one aspect of the present disclosure may include a cell assembly having a plurality of battery cells stacked in at least one direction; a module case configured to accommodate the cell assembly in an inner space; and a thermally conductive member interposed between the cell assembly and the module case, and configured to transfer heat and have a bonding force that varies across portions.

FIG. 2

EP 4 685 931 A1

**Description**

TECHNICAL FIELD

This application is based on and claims priority from Korean Patent Application No. 10-2023-0161479, filed on November 20, 2023, with the Korean Intellectual Property Office, the disclosure of which is incorporated herein in its entirety by reference.

The present disclosure relates to battery technology and, more specifically, to a battery module with improved stability against swelling, and a battery pack and vehicle including the same.

BACKGROUND ART

As the demand for portable electronic products such as smartphones, tablet PCs, and smart watches increases significantly, and as electric vehicles become widespread, active research on batteries mounted to them, especially secondary batteries capable of being repeatedly charged and discharged, is underway.

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

These lithium secondary batteries use lithium-based oxides and carbon materials as positive and negative electrode active materials, respectively. The lithium secondary batteries include an electrode assembly in which positive and negative electrode plates, which are coated with the positive and negative electrode active materials, respectively, are disposed with a separator therebetween, and an exterior case, i.e., a battery case, that stores the electrode assembly with an electrolyte in a sealing manner.

In general, lithium secondary batteries may be classified, depending on the shape of the exterior case, into can-type secondary batteries in which the electrode assembly is stored in a metal can and pouch-type secondary batteries in which the electrode assembly is stored in a pouch of an aluminum laminate sheet. In addition, can-type secondary batteries may be further classified into cylindrical batteries and prismatic batteries depending on the shape. Currently, secondary batteries, especially lithium secondary batteries, have three representative types of batteries such as pouch-type batteries, prismatic batteries, and cylindrical batteries.

Secondary batteries are widely used in medium and large devices such as electric vehicles and energy storage systems (ESSs) for driving and storing energy, as well as in small devices such as portable electronic devices. Furthermore, as the electric vehicle-related industry significantly grows in recent years, interest in batteries, which are considered a core technology, is increasing.

A plurality of secondary batteries may be electrically connected and stored inside a module case to form a battery module. In addition, a battery pack may be configured by including, in addition to one or more battery modules, various electronic components for controlling its charging and discharging operation, such as BMSs (Battery Management System) and fuses.

In order to secure cooling performance and structural stability, the battery module may have a thermally conductive adhesive, such as thermal resin, interposed between the battery cell (secondary battery) and the module case. However, in the case of this type of battery module, the adhesive may bring about problems when swelling occurs.

For example, when a swelling phenomenon occurs in the state where a number of pouch-type cells are stacked inside the module case or pack case, a force may act between the battery cells to push the battery cells. In particular, this force may be greater for battery cells located on the outer side. In this case, if one side of the battery cell is adhered to the module case, the pressure caused by swelling may damage some battery cells or break the arrangement structure of the cell assembly.

For example, in the case where a number of pouch-type cells are stacked and stored in the inner space of the module case with their bottoms bonded by thermal resin, if swelling occurs in the cell stack, the pouch-type cells located on the outer side may be excessively pushed due to the swelling. In addition, during this process, the pouch-type cells located on the outer side may be exposed to damaged, such as cracks or tears.

In addition, even in the case of prismatic or cylindrical cells, if swelling of the cell stack exceeds a certain level, the cells located on the outer side may be pushed outward. Furthermore, during this process, the battery cell may be separated from the thermal resin, which may degrade the heat dissipation performance of the battery cell. In addition, as the cured thermal resin is damaged while the battery cell is pushed, partial or complete structural collapse of the cell stack or battery device may occur.

DISCLOSURE

Technical Problem

The present disclosure is designed to solve the problems of the related art, and therefore the present disclosure is directed to providing a battery module with an improved structure capable of securing stability even when swelling occurs, and a battery pack and vehicle including the same.

However, the technical problems that the present disclosure seeks to solve are not limited to the above-mentioned problems, and other problems not mentioned above will be clearly understood by those skilled in the art from the description of the invention described below.

Technical Solution

In one aspect of the present disclosure, there is provided a battery module including: a cell assembly having a plurality of battery cells stacked in at least one direction; a module case configured to accommodate the cell assembly in an inner space; and a thermally conductive member interposed between the cell assembly and the module case, and configured to transfer heat and have a bonding force that varies across portions.

Here, the thermally conductive member may be interposed between all the battery cells provided in the cell assembly and the module case.

In addition, the thermally conductive member may have a portion having a bonding force that differs along a stacking direction of the plurality of battery cells.

In addition, the thermally conductive member may be configured, at least in part, such that a portion located on an outer side in the stacking direction of the plurality of battery cells has a lower bonding force than a portion located on an inner side.

In addition, the thermally conductive member may be configured such that a portion where an outermost battery cell is located in the cell assembly has a lowest bonding force.

In addition, the thermally conductive member may include two or more thermally conductive unit members having different bonding forces, and the two or more thermally conductive unit members may be disposed along a stacking direction of the cell assembly.

In addition, the thermally conductive member may be configured to have a degree of curing that differs across portions.

In addition, the thermally conductive member may include a curing thermally conductive part and a non-curing thermally conductive part.

In addition, the thermally conductive member may be configured to have a bonding force that varies in two or more directions.

In addition, the thermally conductive member may have a portion having a bonding force that varies in both a stacking direction of the plurality of battery cells provided in the cell assembly and a longitudinal direction of each battery cell.

In addition, the thermally conductive member may be configured to have a lower bonding force in a longitudinal end portion of the battery cell than in a central portion.

In addition, the thermally conductive member may include a central member and an outer member having a lower bonding force than the central member and located further outward than the central member in a stacking direction of the cell assembly, and the outer member may have a width that differs across portions in the stacking direction of the cell assembly.

In addition, the central member may have a portion whose width gradually changes in the stacking direction of the cell assembly.

In addition, the battery module according to the present disclosure may further include a cooling member provided outside or inside the module case and configured to allow coolant to move therethrough.

In another aspect of the present disclosure, there is provided a battery pack including a battery module according to the present disclosure.

In another aspect of the present disclosure, there is provided a vehicle including a battery module according to the present disclosure.

Advantageous Effects

According to the present disclosure, it is possible to secure stability against swelling of a battery device including a battery cell, i.e., a battery module or a battery pack.

In particular, according to an embodiment of the present disclosure, the cell stacking state is able to be stably maintained in a normal state in a battery module or a battery pack including a plurality of battery cells stacked. In addition, it is possible to prevent at least some cells, particularly the outermost cell, from being damaged when swelling occurs.

In addition, according to an embodiment of the present disclosure, it is possible to prevent or suppress the structure of the battery device from collapsing due to damage to a curing adhesive when swelling occurs.

In addition, according to an embodiment of the present disclosure, it is possible to solve a problem in which a battery cell is separated from a thermally conductive adhesive due to swelling, thereby degrading a heat dissipation function. Therefore, the cooling performance of the battery device is able to be consistently maintained.

Therefore, according to these aspects of the present disclosure, the cycle performance of the battery device is able to be improved. That is, according to various aspects of the present disclosure, it is possible to provide a battery device with an improved lifespan, which is able to be stably used for a long period of time.

In addition, the present disclosure may have various other effects, and these will be described in the respective embodiments, or description of effects that may be easily inferred by those skilled in the art will be omitted.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a perspective view schematically illustrating the configuration of a battery module according to an embodiment of the present disclosure.

FIG. 2 is an exploded perspective view of the battery module in FIG. 1.

FIG. 3 is a cross-sectional view of a battery module according to an embodiment of the present disclosure.

FIG. 4 is an enlarged cross-sectional view of a battery module according to an embodiment of the present disclosure.

FIG. 5 is a drawing schematically illustrating a partial configuration of a battery module according to an embodiment of the present disclosure.

FIG. 6 is a drawing schematically illustrating an example of a thermally conductive member included in a battery module according to an embodiment of the present disclosure.

FIG. 7 is a bottom view schematically illustrating the configuration of a battery module in which a thermally conductive member is disposed at the bottom of a cell assembly according to an embodiment of the present disclosure.

FIG. 8 is a bottom view schematically illustrating the configuration of a battery module in which a thermally conductive member is disposed at the bottom of a cell assembly according to another embodiment of the present disclosure.

FIG. 9 is a perspective view schematically illustrating the configuration of a thermally conductive member included in a battery module according to another embodiment of the present disclosure.

FIG. 10 is a cross-sectional view schematically illustrating a partial configuration of a battery module according to another embodiment of the present disclosure.

FIG. 11 is a bottom view schematically illustrating the configuration of a battery module in which a thermally conductive member is disposed at the bottom of a cell assembly according to another embodiment of the present disclosure.

FIG. 12 is a bottom view schematically illustrating the configuration of a battery module in which a thermally conductive member is disposed at the bottom of a cell assembly according to another embodiment of the present disclosure.

FIGS. 13 and 14 are partially enlarged views of some configurations in FIG. 12.

FIG. 15 is a drawing schematically illustrating a coating form of a thermally conductive member on a battery cell included in a cell assembly of a battery module according to an embodiment of the present disclosure.

FIG. 16 is a bottom view schematically illustrating the configuration of a battery module in which a thermally conductive member is disposed at the bottom of a cell assembly according to another embodiment of the present disclosure.

FIG. 17 is an enlarged view of part B6 in FIG. 16.

FIG. 18 is a bottom view schematically illustrating the configuration of a battery module in which a thermally conductive member is disposed at the bottom of a cell assembly according to another embodiment of the present disclosure.

FIG. 19 is a bottom view schematically illustrating the configuration of a battery module in which a thermally conductive member is disposed at the bottom of a cell assembly according to another embodiment of the present disclosure.

FIG. 20 is a cross-sectional view of a battery module according to another embodiment of the present disclosure.

FIG. 21 is an enlarged view of part B8 in FIG. 20.

FIG. 22 is a cross-sectional view of a battery module according to another embodiment of the present disclosure.

FIG. 23 is a cross-sectional view of a battery module according to another embodiment of the present disclosure.

FIG. 24 is a bottom view schematically illustrating a configuration in which a plurality of cylindrical cells are stacked on each other in a cell assembly of a battery module according to another embodiment of the present disclosure.

FIG. 25 is a perspective view schematically illustrating the configuration of a battery pack according to an embodiment of the present disclosure.

FIG. 26 is a perspective view schematically illustrating the configuration of a battery pack according to another embodiment of the present disclosure.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position, arrangement, or rotation of the target object or the position of the observer.

In addition, the present disclosure may include various embodiments. Redundant descriptions of substantially the same or similar configurations will be omitted from respective embodiments.

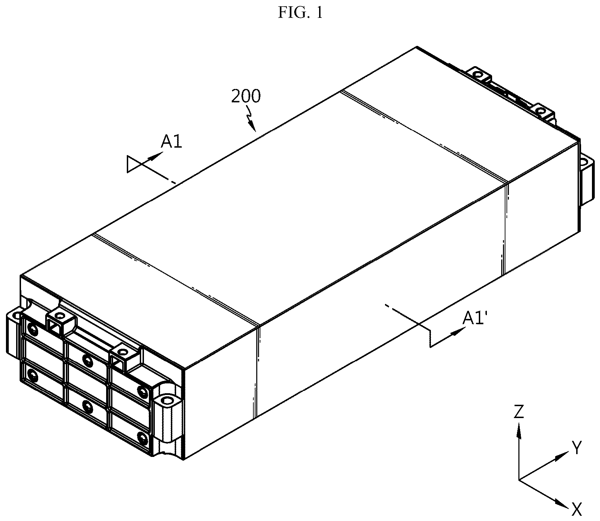

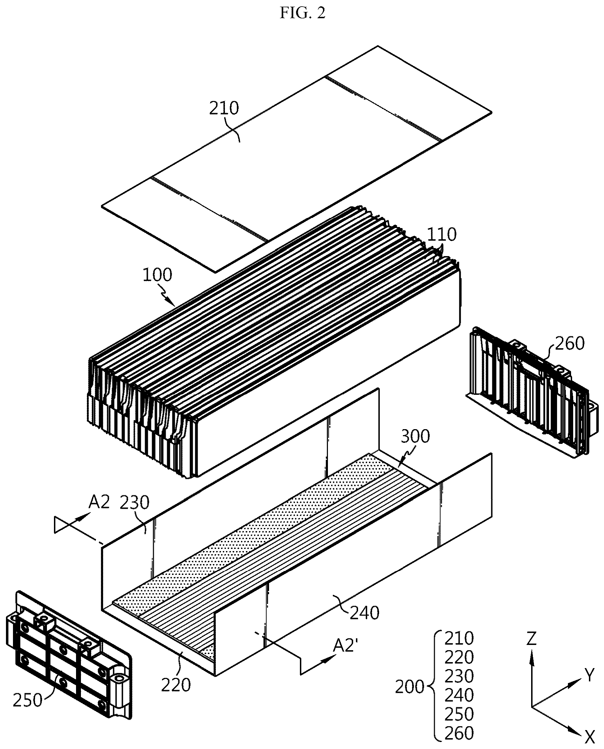

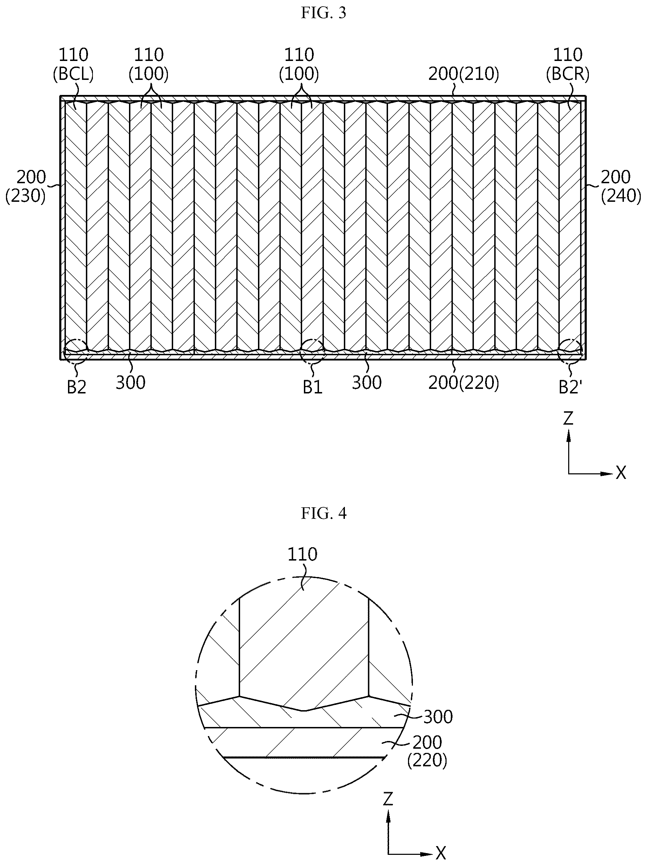

FIG. 1 is a perspective view schematically illustrating the configuration of a battery module according to an embodiment of the present disclosure, and FIG. 2 is an exploded perspective view of the battery module in FIG. 1. FIG. 3 is a cross-sectional view of a battery module according to an embodiment of the present disclosure, and FIG. 4 is an enlarged cross-sectional view of a battery module according to an embodiment of the present disclosure. For example, FIG. 3 may be a cross-sectional view taken along line A1-A1' in FIG. 1, and FIG. 4 may be an enlarged cross-sectional view of part B1 in FIG. 3.

Referring to FIGS. 1 to 4, a battery module according to the present disclosure includes a cell assembly 100, a module case 200, and a thermally conductive member 300.

The cell assembly 100 may include one or more battery cells 110, particularly, a plurality of battery cells 110. Here, each battery cell 110 may indicate one secondary battery, or may indicate a battery group of multiple secondary batteries. In this specification, the description will be made on the assumption that the battery cell 110 represents one secondary battery.

The battery cell 110 may include an electrode assembly, an electrolyte, and a battery case. In this case, the battery case may be configured in various shapes, and the battery cell 110 may be classified into a pouch-type cell, a cylindrical cell, and a prismatic cell depending on the shape of the battery case. Since the types of battery cells 110 are widely known at the time of filing the present disclosure, a detailed description thereof will be omitted. The present disclosure is applicable to all types of secondary batteries known at the time of filing the present disclosure, and is not limited to a specific type of secondary battery.

In the cell assembly 100, the plurality of battery cells 110 may be configured to be stacked in at least one direction. For example, the plurality of battery cells 110 may be stacked to be arranged side by side in a horizontal direction, particularly in a left-right direction (X-axis direction), as shown in FIG. 2. In addition, the plurality of battery cells 110 provided in the cell assembly 100 may be electrically connected to each other in series and/or in parallel through a bus-bar (not shown) and the like.

Meanwhile, in this specification, unless otherwise specified, the X-axis direction in which the plurality of battery cells 110 are stacked will be referred to as a left-right direction, the Y-axis direction, which is a horizontal direction orthogonal to the cell-stacking direction, will be referred to as a front-back direction, and the Z-axis direction orthogonal to the X-Y plane will be referred to as an up-down direction (vertical direction). In addition, the left-right direction, front-back direction, and up-down direction may be expressed as a first direction, a second direction, and a third direction, respectively.

The module case 200 may have an empty space formed therein and configured to accommodate a plurality of cell assemblies 100 in the inner space. For example, the module case 200 may have an upper plate 210, a lower plate 220, a left plate 230, a right plate 240, a front plate 250, and a rear plate 260 to confine the inner space. In addition, the cell assembly 100 may be located in the confined inner space above. The module case 200 may be at least partially made of metal and/or plastic materials.

At least some of the various plate members constituting the module case 200 may be configured in an integrated form. For example, as shown in FIG. 2, the module case 200 may have a main body in the form of a U-frame in which the lower plate 220, the left plate 230, and the right plate 240 are integrated with each other, and the upper plate 210, the front plate 250, and the rear plate 260 may be configured to cover or seal the upper, front, and rear openings of the main body. In this case, the upper plate 210, the front plate 250, and the rear plate 260 and the main body may be coupled by various fastening methods such as welding, bonding, bolting, and hooking. Alternatively, at least a part of the module case 200 may be manufactured as a mono-frame in which the upper plate 210, the lower plate 220, the left plate 230, and the right plate 240 are integrated with each other. Alternatively, the respective plates may be manufactured separately and then coupled to each other by welding, thereby forming the module case 200. However, the present disclosure is not limited to a specific material or form of the module case 200.

The thermally conductive member 300 may be interposed between the cell assembly 100 and the module case 200. For example, referring to FIGS. 3 and 4, the thermally conductive member 300 may be provided between one side of the cell assembly 100, for example, the bottom thereof, and the lower plate 220 of the module case 200.

In addition, the thermally conductive member 300 may be configured to transfer heat between the cell assembly 100 and the module case 200. The battery cell 110 may generate heat during use, and if this heat is not properly discharged, the performance of the battery cell 110 is unable to be stably guaranteed, and it may lead to thermal runaway, ignition, or explosion of the battery cell in worst cases. In this regard, the heat generated from the battery cell 110 needs to be properly discharged to the outside through the module case 200. In this case, the thermally conductive member 300 may facilitate heat transfer between the battery cell 110 and the module case 200, thereby ensuring stable cooling performance for the battery module.

The thermally conductive member 300 may be provided with a material capable of transferring heat. In particular, the thermally conductive member 300 may be made of a resin material, and in this case, the thermally conductive member 300 may be referred to as a thermal resin. The thermally conductive member 300 may include various materials, such as urethane, silicone, and epoxy. The thermally conductive member 300 may be expressed as other terms, such as TIMs (Thermal Interface Materials), potting resin, etc., and various thermal resins or TIMs known at the time of filing the present disclosure may be used as the material of the thermally conductive member 300 of the battery module according to the present disclosure.

In addition, the thermally conductive member 300 may be configured to bond the cell assembly 100 to the module case 200. To this end, the thermally conductive member 300 may include an adhesive component. For example, as shown in FIGS. 2 and 3, in the case where the thermally conductive member 300 is located at the bottom of the cell assembly 100, the thermally conductive member 300 may bond and fix the bottom of the cell assembly 100 to the lower plate 220 of the module case 200.

In particular, in the battery module according to the present disclosure, the thermally conductive member 300 may be configured to bond at least a portion of the cell assembly 100 to the module case 200 with a bonding force that differs across the portions. Here, the bonding force may indicate a fixing force or a fixed strength between the cell assembly 100 and the module case 200 by the thermally conductive member 300.

In this regard, referring to the embodiment in FIG. 3, the thermally conductive member 300 may be interposed between the bottom of the cell assembly 100 and the lower plate 220 of the module case 200, so that the bottom of the cell assembly 100 may be bonded to the lower plate 220 of the module case 200. In this case, the bonding force of the thermally conductive member 300 may be configured differently at the bottom of the cell assembly 100. For example, in FIG. 3, at the bottom of the cell assembly 100 included in one battery module, the thermally conductive member 300 may have a bonding force configured to differ between a portion indicated as B1 and a portion indicated as B2.

This difference in bonding force between portions of the thermally conductive member 300 may be recognized in various ways. For example, the difference in bonding force between portions of the thermally conductive member 300 may be recognized by measuring the force required to separate the cell assembly 100 from the module case 200 for each portion. As another example, the difference in bonding force between portions of the thermally conductive member 300 may also be recognized by the state or shape of the thermally conductive member 300.

According to the above-implemented configuration of the present disclosure, the swelling response performance for the battery module may be improved by partially varying the bonding force of the thermally conductive member 300. Furthermore, the vulnerability to swelling may differ across the portions in a battery module, and according to the above aspect of the present disclosure, the distribution of the bonding forces may be appropriately controlled depending on the partial vulnerability to swelling, enabling adaptive response to swelling for each portion. Therefore, the battery module according to the present disclosure may secure stability or safety against swelling.

The thermally conductive member 300 may be interposed between all battery cells 110 provided in the cell assembly 100 and the module case 200. For example, referring to the implemented configuration in FIGS. 2 and 3, the thermally conductive member 300 may be disposed at the bottom of the cell assembly 100 in the state where the cell assembly 100 is configured such that a plurality of battery cells 110 are stacked in the left-right direction. In this case, the thermally conductive member 300 may be configured to come into direct contact with all battery cells 110 included in the cell assembly 100. That is, in the implemented configuration in FIG. 3, the thermally conductive member 300 may be provided to be in direct contact with the bottoms of all the battery cells 110, from the leftmost battery cell 110 to the rightmost battery cell 110. As a more specific example, in the case where 24 battery cells 110 are provided in a battery module, the thermally conductive member 300 may be disposed to come into contact with all of the 24 battery cells 110.

According to this implemented configuration of the present disclosure, heat dissipation may be performed through the thermally conductive member 300 for all battery cells 110 included in the battery module. Therefore, the overall cooling performance of the battery module may be further improved.

The thermally conductive member 300 may be configured to have a bonding force that differs along the direction (first direction) in which a plurality of battery cells 110 are stacked in the cell assembly 100.

For example, referring to the implemented configuration in FIGS. 2 and 3, a plurality of battery cells 110 may be stacked in the left-right direction (X-axis direction). In addition, the thermally conductive member 300 may be disposed to extend in the left-right direction at the bottom of the plurality of battery cells 110 stacked in the left-right direction while the bonding force differs in the left-right direction. As a more specific example, in the embodiment shown in FIG. 3, the thermally conductive member 300 may have different bonding forces between the portion indicated as B1 and the portion indicated as B2.

If swelling occurs in a cell assembly 100 provided with a plurality of battery cells 110 stacked, movement occurs in the stacking direction of the battery cells 110, which may cause damage or breakage of the cell assembly 100 or structural collapse thereof. However, when the bonding force of the thermally conductive member 300 is configured to differ in the cell-stacking direction as described in the embodiment above, it is possible to more efficiently respond to the swelling of the cell assembly 100.

In particular, the thermally conductive member 300 may be configured such that, at least in part, a portion located on the outer side has a lower bonding force than a portion located on the inner side along the direction in which the plurality of battery cells 110 are stacked in the cell assembly 100. Here, the inner side may refer to a region located in a direction toward the center of the cell assembly 100, and the outer side may refer to the opposite direction of the inner side and indicate a region located in a direction toward the outside of the cell assembly 100. The inner side and the outer side may be relative positions.

For example, in the embodiment illustrated in FIG. 3, referring to B1 and B2, B1 may be a portion located on the inner side because it is closer to the center of the cell assembly 100, and B2 may be a portion located on the outer side. Here, the thermally conductive member 300 may be configured such that the portion B2 located on the outer side has a lower bonding force than the portion B1 located on the inner side. That is, the thermally conductive member 300 may bond the battery cell 110 to the module case 200 more firmly in the portion B1 located on the inner side than in the portion B2 located on the outer side.

In the case where a plurality of battery cells 110 are stacked in one direction, for example, in the left-right direction (X-axis direction), the battery cell 110 located on the outer side in the left-right direction may be pushed more than the battery cell 110 located on the inner side. Therefore, if the battery cells 110 are bonded with the same bonding force, the cell on the outer side is more likely to be damaged due to swelling. However, according to the above-implemented configuration, since the bonding force for the thermally conductive member 300 is configured to be lower for the cell on the outer side than for the cell on the inner side, the degree of freedom for movement of the battery cell 110 may be granted to a certain level. Therefore, damage to the outer cell or collapse of the entire cell assembly 100 may be suppressed when swelling occurs.

Meanwhile, in this specification, unless otherwise specified, the direction toward the center of the battery module will be referred to as an inward direction, and the direction toward the outside of the battery module will be referred to as an outward direction.

Furthermore, the thermally conductive member 300 may be configured to have the lowest bonding force at a portion where the outermost battery cell 110 is located in the cell assembly 100. The thermally conductive member 300 may be applied to the entire area from the outermost battery cell 110 to the innermost battery cell 110 along the stacking direction. In this case, the thermally conductive member 300 may bond the outermost cell, among all battery cells 110 included in the cell assembly 100, to the module case 200 with the lowest bonding force.

For example, the battery cells 110 indicated as BCL and BCR in FIG. 3 may be the outermost cells of the cell assembly 100. In addition, the portions indicated as B2 and B2' are portions where the thermally conductive member 300 is disposed at the bottom of the outermost cells, and may have the lowest bonding force, among all portions of the thermally conductive member 300.

Here, the lowest bonding force may include both a lower bonding force than those in other portions and a bonding force of 0, that is, no bonding force applied. For example, the thermally conductive member 300 disposed at the bottom of the outermost cells indicated as B2 and B2' in FIG. 3 may bond the outermost cells BCL and BCR to the module case 200 with a lower force, compared to the central portion indicated as B1, so that the bonding force may be released even by a relatively weak force. Alternatively, the thermally conductive member 300 disposed at the outer portions indicated as B2 and B2' may play only the role of transferring heat, instead of bonding the outermost cells to the module case 200.

According to the above-implemented configuration, the damage prevention effect for the outermost cells among the entire configuration of the cell assembly 100 may be more stably secured. That is, when swelling occurs in the cell assembly 100, the outermost cells may be most likely to be damaged, but the above-implemented configuration may prevent the problem with the outermost cells being damaged by applying the lowest bonding force to the outermost cells.

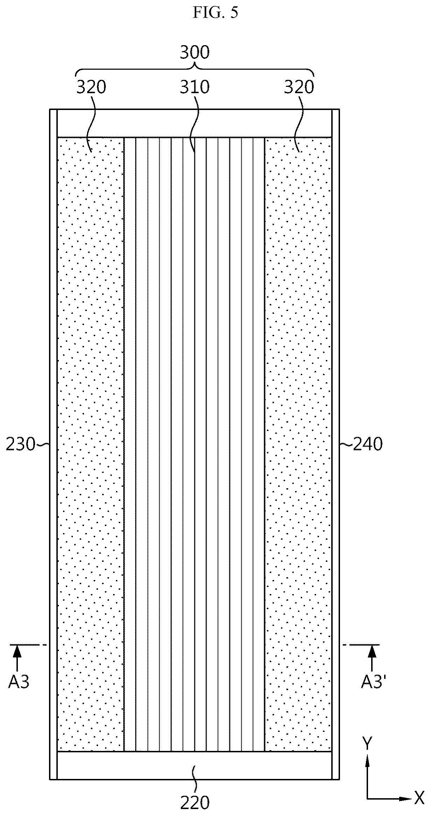

The above thermally conductive member 300 may have two or more thermally conductive unit members having different bonding forces. This will be described in more detail by further referring to FIGS. 5 to 7.

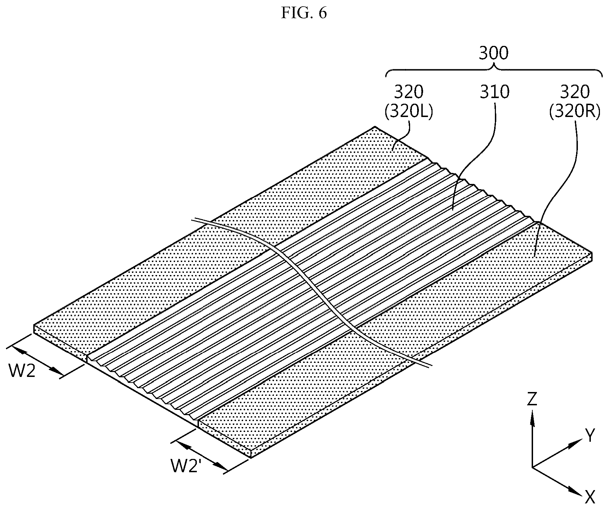

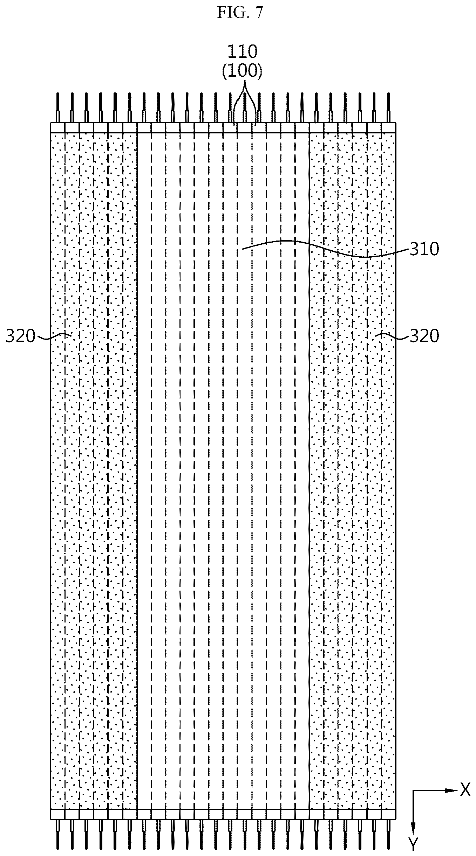

FIG. 5 is a drawing schematically illustrating a partial configuration of a battery module according to an embodiment of the present disclosure. For example, FIG. 5 may be a drawing of a configuration viewed from above in which a thermally conductive member 300 is seated on the module case 200, in particular, on a bottom surface of a U-frame from the separated configuration in FIG. 2. FIG. 6 is a drawing illustrating an example of a thermally conductive member 300 included in a battery module according to an embodiment of the present disclosure. In addition, FIG. 7 is a bottom view schematically illustrating the configuration of a battery module in which a thermally conductive member 300 is disposed at the bottom of a cell assembly 100 according to an embodiment of the present disclosure. In particular, for convenience of explanation, the thermally conductive member 300 is depicted transparently, and the battery cell 110 beyond the thermally conductive member 300 is depicted in a dotted line in FIG. 7.

Referring to FIGS. 5 to 7, the thermally conductive member 300 may have a first unit member 310 and a second unit member 320. More specifically, one first unit member 310 may be provided and two second unit members 320 may be provided. Here, the first unit member 310 and the second unit member 320 may be thermally conductive unit members, i.e., unit elements of the thermally conductive member 300, and may have different bonding forces from each other. Furthermore, these thermally conductive unit members 310 and 320 may be formed of different types of materials.

In addition, the heterogeneous thermally conductive unit members 310 and 320 may be disposed in the stacking direction of the cell assembly 100. For example, as shown in FIG. 7, in the case where a plurality of battery cells 110 are stacked in the left-right direction (X-axis direction) in the cell assembly 100, the first unit member 310 and the second unit members 320L and 320R may be disposed in parallel along the left-right direction.

In particular, the thermally conductive member 300 disposed on one side of the cell assembly 100 may be configured in the form of a plate. In this case, the heterogeneous unit members constituting the thermally conductive member 300, that is, two or more thermally conductive unit members, may be configured in the form of a plate, respectively, such that their sides come into contact with each other in parallel on the same plane, thereby forming a single plate. For example, referring to the configurations illustrated in FIGS. 5 to 7, one first unit member 310 and two second unit members 320 may be configured in the form of a flat plate, and may be disposed in parallel along the X-axis direction on the same X-Y plane, thereby forming a single integrated plate.

As illustrated in FIG. 7, in the state where a plurality of battery cells 110 are arranged side by side in the left-right direction, the first unit member 310 and the second unit member 320, which are heterogeneous thermally conductive unit members, may be disposed at the bottom of the cell assembly 100 in the left-right direction. In this case, the first unit member 310 may be located at the bottom of the inner portion of the cell assembly 100, and the second unit member 320 may be disposed at the bottom of the portion of the cell assembly 100, which is located further outward than the first unit member 310. Since two second unit members 320L and 320R are disposed on the left and right sides of the first unit member 310, the first unit member 310 may be referred to as a central member, and the two second unit members 320L and 320R may be referred to as left and right members, respectively.

In this implemented configuration, the second unit member 320 may be configured to have a lower bonding force than the first unit member 310. That is, the first unit member 310 may fix the battery cells 110 stacked on the central region to the module case 200 with a relatively strong bonding force, and the second unit member 320 may fix the battery cells 110 stacked on the outer side to the module case 200 with a relatively weak bonding force. Other embodiments disclosed in this specification, unless otherwise specifically stated, will be described on the assumption that the first unit member 310 has a higher bonding force and the second unit member 320 has a lower bonding force.

According to the above-implemented configuration, the battery module according to the present disclosure may be configured in a simple structure. In addition, according to the above-implemented configuration, the battery module according to the present disclosure may be manufactured more easily. In particular, according to the above-implemented configuration, the problem with the battery cell 110 disposed on the outer side being easily damaged by swelling may be more effectively prevented.

The thermally conductive member 300 may be configured to have partially different degrees of curing. In particular, in order to provide the thermally conductive member 300 in the manufacturing process of the battery module, a thermally conductive paste including a thermally conductive material with fluidity and viscosity may be applied or filled between the cell assembly 100 and the module case 200. In addition, this thermally conductive paste may be at least partially cured to provide bonding force for fixing the cell assembly 100 and the module case 200 to each other.

In this case, the thermally conductive member 300 may be configured to have a degree of curing of the thermally conductive paste, which differs across the portions, thereby providing partially different bonding forces. In particular, under the same conditions, for example, at room temperature, a thermally conductive paste with a high degree of curing may have a higher bonding force (fixing force) than a thermally conductive paste with a low degree of curing.

The thermally conductive member 300 may be configured to have different degrees of curing along the stacking direction of the cell assembly 100. The degree of curing may indicate the degree of hardening, and since the technique for measuring or determining the degree of curing is widely known at the time of filing the present disclosure, a detailed description thereof will be omitted.

For example, in the implemented configurations in FIGS. 5 to 7, the first unit member 310 and the second unit member 320 may be configured to have different degrees of curing. In addition, the first unit member 310 and the second unit member 320 may be arranged in the stacking direction (X-axis direction) of the cell assembly 100. Furthermore, the second unit member 320 may be disposed further outward than the first unit member 310 in the stacking direction of the cell assembly 100. In particular, the second unit member 320 may be in direct contact with the outermost cell of the cell assembly 100, as indicated by BCL or BCR in FIG. 3.

In this configuration, the second unit member 320 may be configured to have a lower degree of curing than the first unit member 310. That is, in a normal state after the battery module is manufactured, the first unit member 310 may remain harder than the second unit member 320, so that the movement of the battery cell 110 disposed on the central region may be more strongly suppressed. On the other hand, the second unit member 320 may remain softer than the first unit member 310, so that the movement of the battery cell 110 disposed on the outer side may be allowed to some extent.

According to the above-implemented configuration in which the thermally conductive member 300 has partially different degrees of curing, it is possible to more easily implement the configuration in which the bonding force between the cell assembly 100 and the module case 200 differs across the portions.

Meanwhile, if the thermally conductive paste applied or filled between one side of the cell assembly 100 and the module case 200 is cured, the thermally conductive member 300 may have a sheet or pad shape. In this case, the thermally conductive member 300 may be referred to as a thermally conductive sheet or a thermally conductive pad.

The thermally conductive member 300 may have a curing thermally conductive part and a non-curing thermally conductive part.

Here, the curing thermally conductive part may refer to a specific portion of the thermally conductive member 300 that remains in a cured solid state under typical conditions in which the battery module is used, such as room temperature conditions. In particular, even if the thermally conductive paste in a fluid state is applied or filled between the cell assembly 100 and the module case 200 in the manufacturing stage of the battery module, the thermally conductive paste may be cured after a predetermined period of time elapses and may remain in the cured state, thereby providing the curing thermally conductive part.

In addition, the non-curing thermally conductive part may refer to a specific portion of the thermally conductive member 300 that is not cured under normal conditions in which the battery module is used, but maintains a certain degree of fluidity or viscosity. In particular, the thermally conductive paste in a fluid state may be applied or filled between the cell assembly 100 and the module case 200 and may not be cured into a solid state to remain in a gel or sol state, thereby providing the non-curing thermally conductive part. Furthermore, the non-curing thermally conductive part may remain in a sticky state having a viscosity of a certain level or higher even after a certain period of time elapses. The non-curing thermally conductive part may have a higher bonding force or fixing force than the curing thermally conductive part.

For example, in the implemented configurations in FIGS. 5 and 6, the first unit member 310 located in the center region may be a curing thermally conductive part, and the second unit member 320 located on the outer side may be a non-curing thermally conductive part. As a more specific example, a solid-state urethane-based thermal resin may be used for the first unit member 310, and a gel-state silicone-based thermal resin may be used for the second unit member 320. In this case, the gel state of the second unit member 320 may be maintained during use or distribution of the battery module, or under room temperature conditions. Here, the first unit member 310 and the second unit member 320 may be referred to as a thermal pad and a thermal gel, respectively, based on their states.

According to the above-implemented configuration of the present disclosure, the portion of the thermally conductive member 300, which comes into contact with the battery cell 110 on the outer side, may be maintained in an uncured state, so that the outer battery cell 110 may sufficiently move when the cell assembly 100 is swollen. Therefore, in this case, damage to the outer battery cell 110 may be minimized.

Since the curing thermally conductive part remains in the cured state, even if the cell assembly 100 is separated therefrom, the portion in contact with the respective battery cells 110 may have an uneven surface having a shape similar to that of the battery cells 110. On the other hand, since the non-curing thermally conductive part has fluidity, if the cell assembly 100 is separated therefrom, its shape may be at least partially deformed. Even in the case of the non-curing thermally conductive part, the shape of the battery cell 110 may be maintained due to viscosity when the cell assembly 100 is separated. The drawings including FIG. 6 illustrate that there is a difference in the shape of the uneven surface between the first unit member 310 and the second unit member 320 in order to show the difference in adhesion or degree of curing. However, this is intended for convenience of explanation and does not necessarily indicate that there must be a difference in the structure or shape between the first unit member 310 and the second unit member 320. That is, when the cell assembly 100 is assembled or separated, the first unit member 310 and the second unit member 320 may have similar shapes or structures.

Meanwhile, the fact that the thermally conductive member 300 has partially different degrees of curing may be expressed as having partially different states. Here, the different states may include a solid state as a perfect elastic body, a gel state, a sol state, and the like. That is, the partial difference in the degree of curing of the thermally conductive member 300 may bring about a difference in elasticity, viscosity, fluidity, or the like. In particular, the thermally conductive member 300 may have a portion that is in a solid state and a portion that is in a gel state. For example, the first unit member 310, as a curing resin, may be in a perfect elastic state, and the second unit member 320, as a non-curing resin, may be in a gel state.

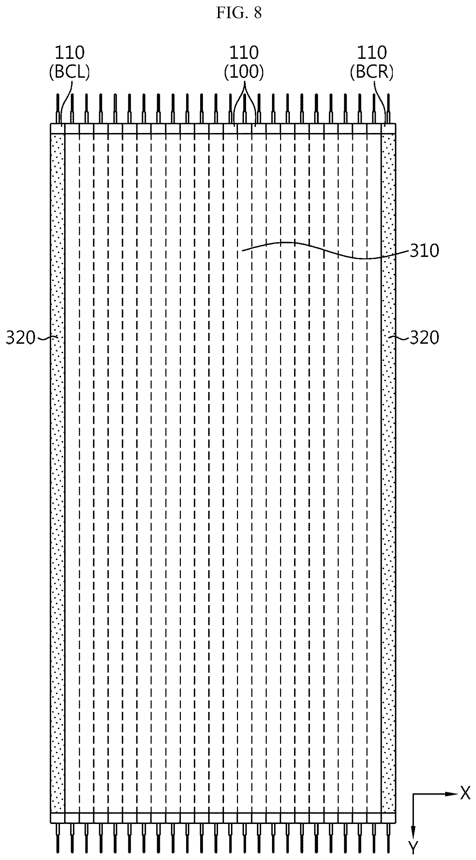

FIG. 8 is a bottom view schematically illustrating the configuration of a battery module in which a thermally conductive member 300 is disposed at the bottom of a cell assembly 100 according to another embodiment of the present disclosure. For example, FIG. 8 may show a modification of the embodiment in FIG. 7.

Referring to FIG. 8, the thermally conductive member 300 includes a first unit member 310 and a second unit member 320 so that the widths (lengths in the left-right direction) of the first unit member 310 and the second unit member 320 are different from those of the embodiment in FIG. 7. More specifically, the widths of two second unit members 320 may be reduced from those of the embodiment in FIG. 7. In particular, the second unit members 320 may be configured to cover only the bottoms of the outermost cells BCL and BCR on the left and right sides of the cell assembly 100. In addition, the width of the first unit member 310 may be increased by the same amount as the reduced width of the second unit member 320 to a value greater than the width of the embodiment in FIG. 7.

In this case, the first unit member 310 may be in contact with the remaining portions of the battery cell 110, excluding the outermost cells BCL and BCR, in the cell assembly 100. In addition, the second unit members 320 may be in contact with the outermost cells BCL and BCR. In this case, similarly to the previous embodiment, the first unit member 310 may have a higher bonding force than the second unit member 320.

According to the above-implemented configuration, only the outermost cells BCL and BCR may be movable, whereas almost all the remaining battery cells 110 may be fixed. This implemented configuration may secure the damage prevention effect of the outermost cells while improving the overall fixing force for the cell assembly 100.

In addition to the configuration in FIGS. 7 and 8, the configuration in which the thermally conductive member 300 disposed on at least one side of the cell assembly 100 has a bonding force that varies depending on the portions may be implemented in various forms. Representatively, the widths (lengths in the X-axis direction) of the first unit member 310 and/or the second unit member 320 may be configured to be different from those of the embodiments in FIGS. 7 and 8. For example, the width of the second unit member 320 may be configured to be greater than that illustrated in FIG. 8 and less than that illustrated in FIG. 7.

The widths of the first unit member 310 and/or the second unit member 320 may be designed in various ways depending on various conditions. For example, they may be designed differently to have appropriate values depending on various factors such as the shapes, types, sizes, number of stacks, or arrangement of the battery cells 110 included in the cell assembly 100, or the type, properties, composition, size, or form of the thermally conductive member 300.

As a more specific example, in the embodiment in FIG. 6, the width of the left unit member 320L of the second unit members 320 is indicated as W2, and the width of the right unit member 320R is indicated as W2'. In this case, the width W2 of the left unit member 320L may be designed according to the following Equation.

$$W0 \leq W2 \leq (n/3)W0.$$

Here, WO represents the width of one battery cell 110, and n represents the total number of battery cells 110 included in the cell assembly 100.

According to the Equation above, the width WO of the left unit member 320L may be at least the width of one battery cell 110 or more, and may be up to the sum of the widths of the battery cells 110 corresponding to 1/3 of the total number of battery cells 110. For example, if 24 battery cells 110 are provided in the cell assembly 100, the left unit member 320L may be configured to have a width capable of covering the bottom of at least one battery cell 110 up to eight battery cells 110.

Furthermore, the left unit member 320L is located at the left end of the thermally conductive member 300 and may come into direct contact with at least the leftmost battery cell 110. For example, the left unit member 320L may be configured to be in contact only with the outermost left cell BCL, as shown in the configuration in FIG. 8. Alternatively, the left unit member 320L may be configured to be in contact with the outermost left cell BCL, extending to the battery cell 110 located somewhat inward, as shown in the configuration in FIG. 7. For example, the left unit member 320L may be configured to come into direct contact with the bottom of a total of eight battery cells 110, from the outermost left cell BCL to the eighth battery cell 110 located on the right side.

In addition, the right unit member 320R may be provided to be symmetrical to the left unit member 320L in sizes and shapes, except that it is located on the right side of the thermally conductive member 300. Therefore, the description of the width W2 of the left unit member 320L may be applied to the width W2' of the right unit member 320R in a similar manner. For example, the right unit member 320R may be configured to be in contact only with the outermost right cell BCR, as shown in the configuration in FIG. 8. Alternatively, the right unit member 320R may come into direct contact with the bottom of two or more battery cells including the outermost right cell BCR, for example, a total of eight battery cells 110 from the outermost right cell BCR to the eighth battery cell 110 located on the left side.

Meanwhile, the first unit member 310 may be appropriately designed depending on the width of the second unit member 320. In particular, since the first unit member 310 is disposed between two second unit members 320 while the entire width of the thermally conductive member 300 is configured to cover all the battery cells 110 included in the cell assembly 100, the width of the first unit member 310 may be determined depending on design of the width of the second unit member 320. For example, if the width of the second unit member 320 is designed to be narrow, the width of the first unit member 310 may be designed to be wide. On the other hand, if the width of the second unit member 320 is designed to be wide, the width of the first unit member 310 may be relatively narrow.

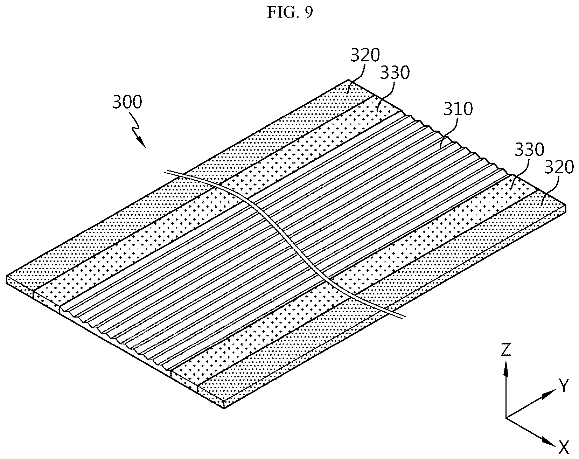

FIG. 9 is a perspective view schematically illustrating the configuration of a thermally conductive member 300 included in a battery module according to another embodiment of the present disclosure.

Referring to FIG. 9, three or more different types of thermally conductive unit members may be provided. More specifically, the thermally conductive member 300 may have a first unit member 310, a second unit member 320, and a third unit member 330 as thermally conductive unit members. These heterogeneous unit members may be disposed in parallel in the stacking direction (X-axis direction) of the cell assembly 100. Here, the first unit member 310 may be located in the central region, and the second unit member 320 may be located at the outermost side along the stacking direction of the cell assembly 100, which may be similar to the previous embodiment in FIG. 6. However, in the embodiment in FIG. 9, the third unit member 330 may be interposed between the first unit member 310 and the second unit member 320.

The bonding force of the third unit member 330 may be configured differently from those of the first unit member 310 and the second unit member 320. The bonding force of the third unit member 330 may fall within a range between the bonding force of the first unit member 310 and the bonding force of the second unit member 320. In particular, the bonding force of the first unit member 310 may be configured to be greater than the bonding force of the second unit member 320. In this case, the third unit member 330 may have a bonding force that is less than the bonding force of the first unit member 310 and greater than the bonding force of the second unit member 320.

In this case, when the bonding force of the first unit member 310 is D1, the bonding force of the second unit member 320 is D2, and the bonding force of the third unit member 330 is D3, the following relationship may be established.

$$D1 > D3 > D2$$

In particular, in this implemented configuration, for the battery cells 110 included in the cell assembly 100, the bonding force may be gradually reduced from the central region to the outer side.

According to the above-implemented configuration, it is possible to prevent the bonding force between adjacent battery cells from changing rapidly between different thermally conductive unit members. Therefore, in this case, it is possible to respond more precisely to the swelling of the battery cells 110 included in the cell assembly 100. In particular, for a plurality of battery cells 110 included in the cell assembly 100, the pressure due to swelling may gradually change to increase from the central region to the outer side. Therefore, according to the above-implemented configuration, if the bonding force between adjacent battery cells 110 gradually changes, it is possible to more effectively respond to the sequential swelling pressure change in the cell-stacking direction. Therefore, it may be more effective in suppressing the damage to multiple battery cells 110 and maintaining the structural rigidity of the battery module. Furthermore, the thermally conductive member 300 may be provided with four or more types of thermally conductive unit members having different bonding forces. In this case, the bonding force may more gently change between the thermally conductive unit modules.

Meanwhile, two or more types of thermally conductive unit members may be configured in a semi-solid or fluid state such as a gel or sol. In this case, the heterogeneous thermally conductive unit members may be configured to have different viscosities.

For example, in the embodiment shown in FIG. 9, both the second unit member 320 and the third unit member 330 may be configured in a fluid state, particularly in a gel or sol state, but may be configured to have different viscosity coefficients. In particular, the second unit member 320 located relatively on the outer side in the cell-stacking direction may have a lower viscosity coefficient than the third unit member 330 located relatively on the inner side.

According to the above-implemented configuration, when swelling occurs in the cell assembly 100, the outer battery cell 110 (second cell) in contact with the second unit member 320 may be more movable than the inner battery cell 110 (third cell) in contact with the third unit member 330. That is, when swelling occurs in the battery cell 110, both the second cell and the third cell may move, but the third cell may move a smaller distance than the second cell. Since the third cell has a lower pressure due to swelling than the second cell, even if it has a small movement distance, the possibility of damage may not be high. In addition, according to the above configuration, the third cell may absorb the swelling of the cell assembly 100 to a certain level or more, and the third cell may be prevented from moving excessively, thereby further increasing the pressure on the second cell.

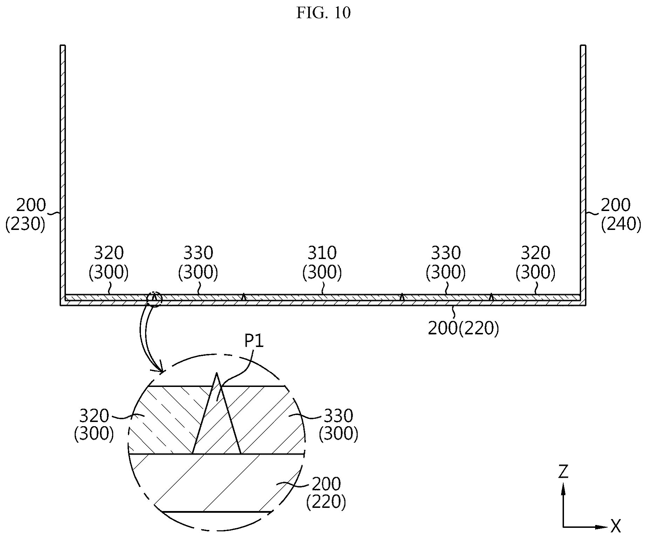

FIG. 10 is a cross-sectional view schematically illustrating a partial configuration of a battery module according to another embodiment of the present disclosure. For example, FIG. 10 may be an example of a cross-sectional configuration taken along line A2-A2' in the exploded perspective view in FIG. 2.

Referring to FIG. 10, the module case 200 may have a separation protrusion indicated as P1 on a portion to which the thermally conductive member 300 is attached. In particular, in the case where the thermally conductive member 300 is applied to the upper surface of the lower plate 220 forming the bottom of the module case 200, the separation protrusion P1 may be provided on the upper surface of the lower plate 220 of the module case 200. In particular, the separation protrusion P1 may protrude from the inner surface of the module case 200 toward the inner space. In addition, the separation protrusion P1 may be configured to extend in the horizontal direction. In particular, the extension direction of the separation protrusion P1 may be the longitudinal direction of the battery cell 110, which is the horizontal direction orthogonal to the stacking direction of the battery cell 110. For example, the separation protrusion P1 illustrated in FIG. 10 may be configured to extend in the Y-axis direction.

Furthermore, this separation protrusion P1 may be interposed between different thermally conductive unit members. For example, as illustrated in FIG. 10, if the first unit member 310, the third unit member 330, and the second unit member 320, as thermally conductive unit members, are sequentially arranged, the separation protrusion P1 may be disposed between the first unit member 310 and the third unit member 330 and/or between the third unit member 330 and the first unit member 310. In such an implemented configuration, the adjacent thermally conductive unit members may be configured such that at least a portion is spaced apart in the cell-stacking direction, instead of being configured such that they are in direct contact with each other. For example, as illustrated in FIG. 10, the adjacent thermally conductive unit members may be spaced apart in the left-right direction (X-axis direction) by the separation protrusion P1.

According to this implemented configuration of the present disclosure, when a fluid thermally conductive paste is applied or filled to provide a thermally conductive member 300 on the surface of the module case 200, the thermally conductive paste may be well settled at a fixed position. Furthermore, in this case, the thermally conductive paste may be effectively prevented from being separated to another position. In particular, as shown in FIG. 2, when the module case 200 includes a main body in the form of a U-frame, the thermally conductive paste may be applied to the upper surface of the lower plate 220 of the U-frame and then the cell assembly 100 may be seated thereon, thereby producing the battery module. In this case, the separation protrusion P1 may guide the applied position of the thermally conductive paste for each thermally conductive unit member. Furthermore, the separation protrusion P1 may divide the space of the module case 200 where the thermally conductive member 300 is attached into multiple portions, so that multiple thermally conductive unit members may be easily divided and disposed. In addition, the separation protrusion P1 may prevent the thermally conductive paste for each thermally conductive unit member from flowing or moving from a predetermined position to another position. Therefore, in this case, the coating or filling process of the thermally conductive member 300 may be performed more easily, and the productivity and structural stability of the battery module may be improved.

In addition, according to the above-implemented configuration, a change in the shape or position of the thermally conductive unit member configured as non-curing resin or the like may be minimized by the separation protrusion P1 even during the use of the battery module. In particular, even in the case where the battery module is frequently exposed to an environment such as vibration or acceleration, such as a battery module for a vehicle, each thermally conductive unit member may maintain its position consistently. Therefore, the heat dissipation performance of the cell assembly 100 may be continuously and stably secured by the thermally conductive member 300.

In addition, according to one aspect of the present disclosure, it is possible to effectively respond to swelling through appropriate positioning of the thermally conductive unit members having different bonding forces or fixing forces. In this case, according to the above-implemented configuration, since the arrangement of these thermally conductive unit members may be maintained, the swelling response performance may also be continuously and stably secured.

As shown in FIG. 10, the separation protrusion P1 may have a portion whose width becomes narrower toward the end. In particular, the separation protrusion P1 may have an end configured to be sharp, thereby forming an inclined surface. According to this implemented configuration, when applying the thermally conductive paste, the thermally conductive paste may easily reach the inner surface of the module case 200. Therefore, the thermally conductive member 300 may be surely interposed between the battery cell 110 and the module case 200, thereby stably securing the cooling performance by the thermally conductive member 300. In addition, the separation protrusion P1 may have various other forms.

Although the various embodiments described above have shown that one thermally conductive member 300 has a bonding force that discontinuously changes in specific portions, the bonding force may be configured to continuously change. For example, in the implemented configurations in FIGS. 6 to 8, the bonding force changes based on the left and right sides where the first unit member 310 and the second unit member 320 are in contact with each other. However, the bonding force may be configured to gradually change from the center to the end of the thermally conductive member 300 in the cell-stacking direction. For example, different types of thermally conductive pastes may be applied to the inner surface of the module case 200 so that they are mixed in the portion where thermally conductive pastes come into contact with each other, instead of clearly distinguishing the applied sections between the thermally conductive pastes, thereby implementing sequential changes in the bonding force.

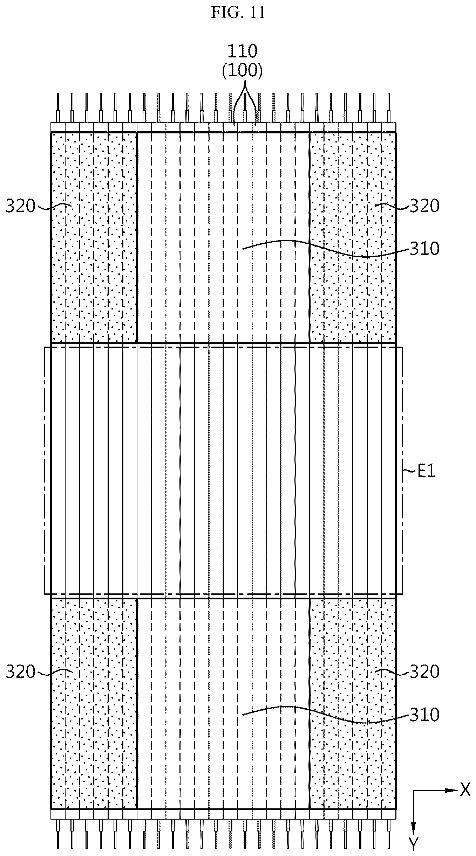

FIG. 11 is a bottom view schematically illustrating the configuration of a battery module in which a thermally conductive member 300 is disposed at the bottom of a cell assembly 100 according to another embodiment of the present disclosure. For example, FIG. 11 may show another modification of the embodiment in FIG. 7.

Referring to FIG. 11, a thermally conductive member 300 may be applied to one side of the cell assembly 100, in particular, to the bottom thereof. In this case, the thermally conductive member 300 may not be applied to the central portion of the battery cell 110 in the longitudinal direction (Y-axis direction) thereof, as indicated by E1. Furthermore, the thermally conductive member 300 may be configured to come into direct contact with all battery cells 110 included in the cell assembly 100, but may not be applied to the central portion of all the battery cells 110.

According to this implemented configuration of the present disclosure, the economic feasibility and lightness of the battery module may be improved through efficient arrangement of the thermally conductive member 300. In particular, the central portion of the cell assembly 100, such as the portion E1, may not emit a large amount of heat. Therefore, if the thermally conductive member 300 is not applied to the central portion as in the above-implemented configuration, the cooling performance of the battery module is not significantly reduced, but it may be advantageous in terms of cost reduction or weight reduction due to the reduced amount of thermally conductive member 300.

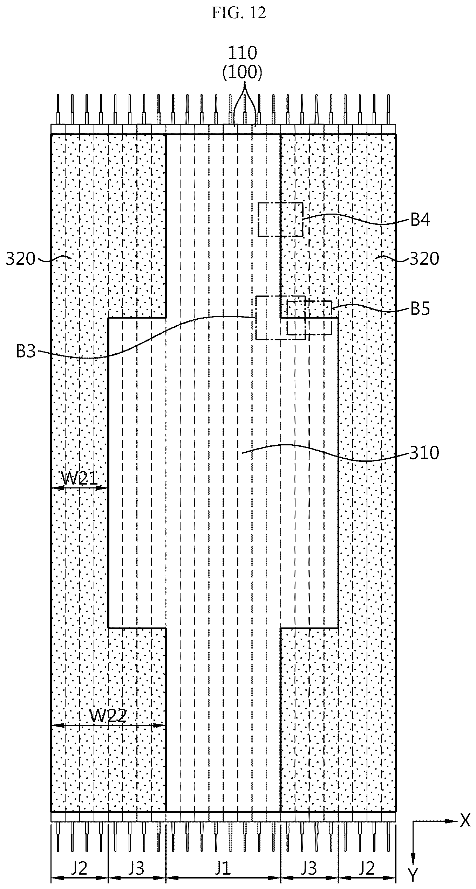

The thermally conductive member 300 may be configured to have a bonding force that differs in two or more directions. That is, the previous embodiments have described the configuration of the thermally conductive member 300 that has a bonding force varying in one direction, particularly in the stacking direction of the battery cell 110. However, the thermally conductive member 300 may also be configured to have a bonding force that varies in two or more different directions. This will be described in more detail with reference to FIG. 12 and other drawings.

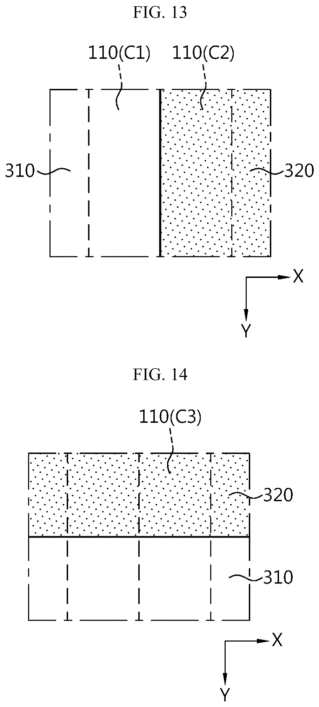

FIG. 12 is a bottom view schematically illustrating the configuration of a battery module in which a thermally conductive member 300 is disposed at the bottom of a cell assembly 100 according to another embodiment of the present disclosure. In addition, FIGS. 13 and 14 are partially enlarged views of some configurations in FIG. 12. In particular, FIG. 13 is an enlarged view of part B4 in FIG. 12, and FIG. 14 is an enlarged view of part B5 in FIG. 12.

Referring to FIG. 12 to FIG. 14, a first unit member 310 and a second unit member 320 may be configured to have different bonding forces from each other, and may be arranged in the left-right direction, which is the stacking direction of the cell assembly 100. In this case, the first unit member 310 and the second unit member 320 may have bent portions formed at the boundary therebetween. For example, as in the portion indicated as B3 in FIG. 12, the first unit member 310 and the second unit member 320 may have bent portions, respectively, formed at the boundary, and these bent portions may be provided to fit each other. In addition, this bent shape causes the thermally conductive member 300 to have a bonding force that varies in two or more different directions.

In particular, referring to the portion B4 in FIG. 12 and the configuration in FIG. 13, the first unit member 310 and the second unit member 320 may be disposed in the left-right direction (X-axis direction), which is the stacking direction of the cell assembly 100, so that the bonding force of the thermally conductive member 300 may be configured to vary in the left-right direction in this portion. On the other hand, referring to the portion B5 in FIG. 12 and the configuration in FIG. 14, the first unit member 310 and the second unit member 320 may be disposed in a direction different from the stacking direction (X-axis direction) of the cell assembly 100.

In this implemented configuration, the bonding force is configured to partially differ in two or more different directions between different thermally conductive unit members. In this case, in addition to the bonding force that differs between adjacent battery cells 110, the bonding force may also partially vary even in one battery cell 110 by the thermally conductive members 300. For example, referring to the configuration in FIG. 13, the bonding force may differ between adjacent battery cells 110. In addition, referring to FIG. 14, the bonding force may vary across the portions in one battery cell 110.

In particular, the thermally conductive member 300 may have a portion in which the bonding force differs in both the stacking direction of multiple battery cells 110 provided in the cell assembly 100 and the longitudinal direction of one battery cell 110. That is, the thermally conductive member 300 may be configured to have a bonding force that differs in both directions orthogonal to each other. In this case, the thermally conductive member 300 may have both a portion in which the bonding force is configured to differ in the stacking direction of the battery cell 110 and a portion in which the bonding force is configured to differ in the longitudinal direction of each battery cell 110.

For example, referring to the implemented configurations in FIGS. 12 to 14, a plurality of battery cells 110 may be disposed side by side in the left-right direction (X-axis direction) in the cell assembly 100, and each battery cell 110 may be configured to extend in the front-back direction (Y-axis direction). In this case, the thermally conductive member 300 may include both the portion B4 in FIG. 12, i.e., the portion in which the bonding force is configured to differ in the left-right direction, as shown in FIG. 13, and the portion B5 in FIG. 12, i.e., the portion in which the bonding force is configured to differ in the front-back direction, as shown in FIG. 14.

In this case, the bonding force may more appropriately differ depending on the deformation form of the cell assembly 100 when swelling occurs. In particular, the pressure due to swelling may be different between different battery cells 110, and also be different between portions in a single battery cell 110. Alternatively, the damage caused by swelling may be different between different battery cells 110, and also be different depending on portions in a single battery cell 110. According to the he above-implemented configuration, the mobility of the battery cell 110 may be differentially provided depending on the intensity of the pressure and the possibility of damage due to swelling for each cell and/or each portion, thereby effectively reducing the possibility of damage to a specific cell and/or a specific portion.

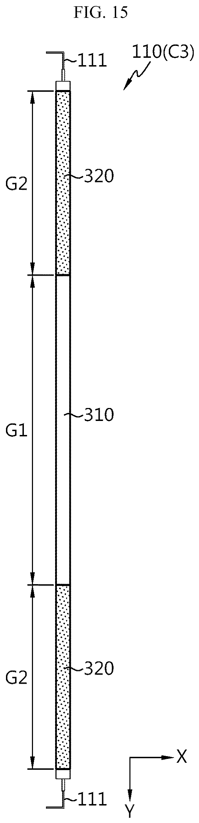

Furthermore, the thermally conductive member 300 may be configured to have a lower bonding force in the longitudinal end portion of the battery cell 110 than in the central portion. This will be described in more detail by further referring to FIG. 15.

FIG. 15 is a drawing schematically illustrating a coating form of a thermally conductive member 300 on a battery cell 110 included in a cell assembly 100 of a battery module according to an embodiment of the present disclosure. In particular, FIG. 15 may be a battery cell 110 indicated as C3 in FIG. 14.

Referring to FIG. 15, the battery cell 110 may be formed to extend in the front-back direction (Y-axis direction). In particular, the battery cell 110 may be a pouch-type cell, and the cell assembly 100 of the battery module according to an embodiment of the present disclosure may be configured such that a plurality of pouch-type cells are stacked in the left-right direction (X-axis direction) while standing in the up-down direction (Z-axis direction). In this case, the respective pouch-type cells may be arranged such that wide surfaces of storage portions are disposed in the left-right direction so as to face each other and such that sealing portions on the edge of the storage portion are disposed in the front-back direction and up-down direction. In particular, an electrode lead 111 may protrude from the sealing portion of the pouch-type cell disposed in the front-back direction.

Such battery cells 110 may be included in the cell assembly 100, and some of the battery cells 110 may be applied with bonding force that differs in the longitudinal direction (Y-axis direction). That is, the pouch-type cell C3 illustrated in FIG. 15 may have a first unit member 310 disposed in the central region indicated by G1 in the longitudinal direction and a second unit member 320 disposed in the longitudinal end side indicated by G2. In particular, the second unit member 320 may be configured to have a lower bonding force than the first unit member 310. For example, non-curing thermal resin having a lower bonding force may be used for the second unit member 320, and curing thermal resin having a higher bonding force may be used for the first unit member 310.

When swelling occurs in the cell assembly 100, the pouch-type cell included in the cell assembly 100 exhibits more damage at the longitudinal end portion indicated by G2, such as tears, than at the center portion indicated by G1 in the longitudinal direction. Furthermore, when the pouch-type cell is subjected to pressure due to swelling while the bottom thereof is bonded, the lower edge portion on the terrace where the electrode lead 111 is located may be easily damaged, such as cracks or tears. However, according to the above-implemented configuration, the thermally conductive member 300 may be configured to have a lower bonding force at the end portion that is easily damaged in consideration of the above characteristics to allow the end portion to be movable to some extent, thereby more effectively preventing damage to the end portion. On the other hand, by suppressing the movement of the central portion of the pouch-type cell, the entire pouch-type cell may be prevented from moving. Therefore, it is possible to prevent the pressure due to swelling from increasing on the battery cell 110 located further outward than the corresponding pouch-type cell and to absorb the swelling to a certain extent. In addition, in this case, it may be more advantageous to maintain the overall structure of the cell assembly 100.

Meanwhile, the previous drawings including FIG. 15 show that the thermally conductive member 300 is not applied to the entirety of one side (e.g., the bottom) of the battery cell 110 and is not applied to both end portions in the longitudinal direction of the cell. However, this is only an example, and the thermally conductive member 300, particularly the second unit member 320, may be applied to both end portions of each battery cell 110.

The thermally conductive member 300 may include a central member and an outer member. Here, the central member may be a thermally conductive unit member located in the central region of the cell assembly 100 in the stacking direction. In addition, the outer member may be a thermally conductive unit member located further outward than the central member in the stacking direction of the cell assembly 100. In particular, the outer member may have a lower bonding force than the central member. For example, in the previous implemented configurations including FIG. 12, the first unit member 310 may be the central member, and the second unit member 320 may be the outer member.

In this case, the outer member may be configured to have a width that differs across the portions in the stacking direction of the cell assembly 100. In particular, the outer member may have a width that differs across the portions in the longitudinal direction of the plurality of battery cells 110 included in the cell assembly 100. For example, referring to the implemented configuration in FIG. 12, the second unit member 320 located on the left side of the first unit member 310 is an outer member, and may have a width of the central portion in the longitudinal direction being W21 and a width of the end portion being W22. In this case, W21 and W22 may have different values. In particular, the outer member may be configured such that the width W22 of the end portion is greater than the width W21 of the central portion, as shown in FIG. 12.

Furthermore, as shown in FIG. 12, the thermally conductive member 300 may be configured as a square overall when viewed from above or below. In this case, the second unit member 320, as an outer member, located on the left side may be configured such that the central portion of the right side is concavely recessed to the left. In addition, the second unit member 320, as an outer member, located on the right side may be configured such that the central portion of the left side is concavely recessed to the right. In addition, the first unit member 310, i.e., the central member, located between the two outer members may be configured to conform to the recessed shape of the outer member. That is, the central member may have a convex shape in the central portion so as to fit into the concave portion of the outer member. For example, the central member may be configured such that the central portion of the left side protrudes convexly in the left direction and such that the central portion of the right side protrudes convexly in the right direction.

In the above-implemented configuration, the battery cells 110 included in the cell assembly 100 may come into contact with the thermally conductive member 300 in various manners. For example, the battery cells 110 disposed in a portion indicated as J1 in FIG. 12 may come into contact only with the first unit member 310 (central member) so as to be firmly fixed to the module case 200. In addition, the battery cells 110 disposed in a portion indicated as J2 in FIG. 12 may come into contact only with the second unit member 320 (outer member) so as to be movable. In particular, the portion indicated as J2 may include the outermost battery cell 110. Next, the battery cells 110 disposed in a portion indicated as J3 in FIG. 12 may come into contact with both the first unit member 310 and the second unit member 320. In particular, the battery cells 110 disposed in the portion indicated by J3, like the battery cells 110 illustrated in FIG. 15, may come into contact with the first unit member 310 having a high bonding force in the central portion to be fixed to the module case 200, and may come into contact with the second unit member 320 having a low bonding force in the end portion to be partially movable.

In this case, the cell assembly 100 may include both a battery cell 110 that is in contact only with a single type of thermally conductive unit member and a battery cell 110 that is in contact with different types of thermally conductive unit members. In particular, the cell assembly 100 may include a battery cell 110 that is in contact only with the first unit member 310, a battery cell 110 that is in contact only with the second unit member 320, and a battery cell 110 that is in contact with both the first unit member 310 and the second unit member 320.

According to this implemented configuration of the present disclosure, the thermally conductive member 300 may provide different bonding forces depending on the stacking positions of the battery cells 110 inside the cell assembly 100, so the overall structural stability of the cell assembly 100 may be improved in a normal state, and the effect of preventing damage to the respective cells may be improved when swelling occurs.

Meanwhile, the width of the outer member may be configured to change in a stepwise pattern depending on the positions, as shown in FIG. 12. However, the present disclosure is not necessarily limited thereto, and the width of the outer member or inner member may be configured to change in various ways.

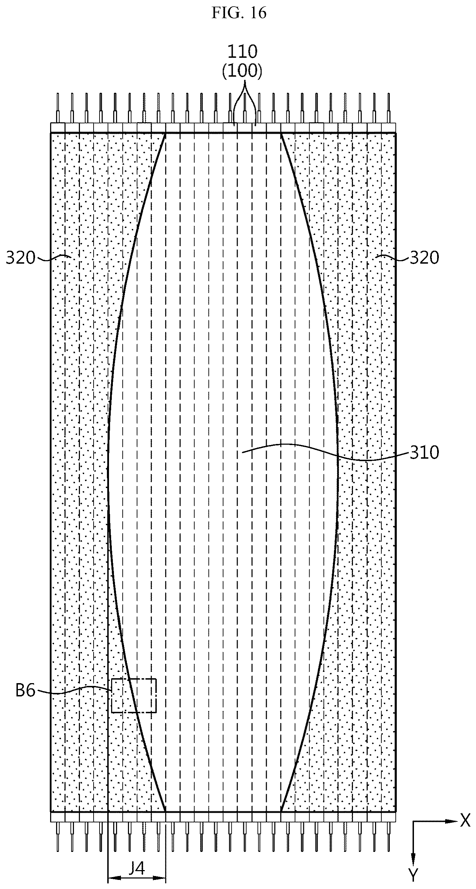

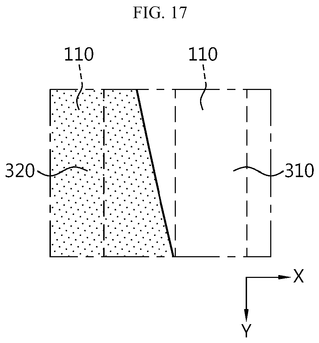

FIG. 16 is a bottom view schematically illustrating the configuration of a battery module in which a thermally conductive member 300 is disposed at the bottom of a cell assembly 100 according to another embodiment of the present disclosure. FIG. 17 is an enlarged view of part B6 in FIG. 16.

Referring to FIGS. 16 and 17, at least a portion of the central member may be configured to have a width that gradually changes in the longitudinal direction of the cell. For example, as illustrated in FIG. 16, the central member, as a first unit member 310, may be configured to have a width that varies from the front end to the rear end in the left-right direction (Y-axis direction), i.e., the longitudinal direction of the cell. In particular, the first unit member 310 may be configured to have a width that gradually increases from the end portions to the central portion along the front-back direction, so that the central portion has the maximum width. In this case, the second unit member 320, as an outer member, may be formed to become narrow from the end portion to the central portion in the front-back direction, in response to the shape of the first unit member 310. That is, the second unit member 320, which is the outer member, may be formed to have a large width at the end portions in the longitudinal direction of the cell.

In this case, at least some battery cells 110 may have boundaries between different thermally conductive unit members formed in an oblique or curved line, as illustrated in FIG. 17. In particular, in the case of pouch-type cells disposed in an area indicated as J4 in FIG. 16, the contact area of the first unit member 310 with a high bonding force may be reduced in the outward direction (-X-axis direction), and the contact area of the second unit member 320 with a low bonding force may increase. In particular, the pouch-type cell disposed in the above area may be movable at front and rear ends where the second unit member 320 is disposed, and the contact area of the second unit member 320 may gradually increase toward the outward direction.

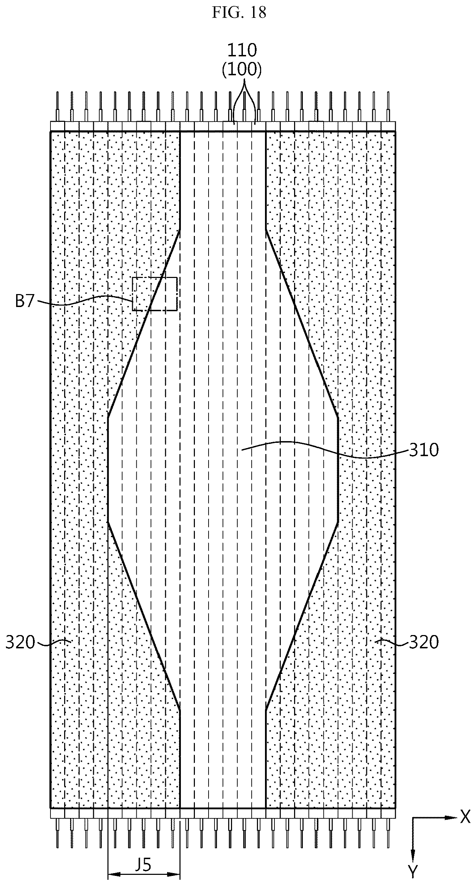

FIG. 18 is a bottom view schematically illustrating the configuration of a battery module in which a thermally conductive member 300 is disposed at the bottom of a cell assembly 100 according to another embodiment of the present disclosure.

Referring to FIG. 18, similarly to the embodiment in FIG. 16, a second unit member 320, as an outer member, may be formed so that the width of an end portion in the longitudinal direction of the battery cell 110 is large, and a first unit member 310, as a central member, may be formed so that the width of a central portion in the longitudinal direction of the battery cell 110 is large. Furthermore, the second unit member 320 and the first unit member 310 may be configured so that the concave and convex portions fit into each other and so that the boundary therebetween is formed in an oblique line, such as the portion indicated by B7.

According to the above-implemented configuration, at least some battery cells 110 included in the cell assembly 100, for example, the battery cells 110 disposed in an area indicated by J5 in FIG. 18, may be configured such that the contact area of the first unit member 310 and/or the second unit member 320 in the cell-stacking direction changes at a constant ratio. Therefore, the bonding force may steadily and gradually vary between the plurality of battery cells 110 stacked in the corresponding area.

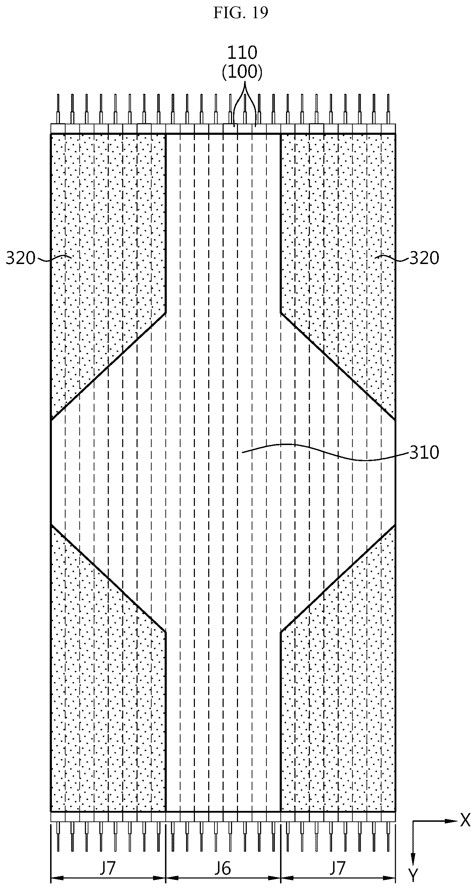

FIG. 19 is a bottom view schematically illustrating the configuration of a battery module in which a thermally conductive member 300 is disposed at the bottom of a cell assembly 100 according to another embodiment of the present disclosure.

Referring to FIG. 19, all battery cells 110 included in the cell assembly 100 may come into contact with the first unit member 310 having a high bonding force. However, at least some battery cells 110 may be configured to have different contact areas with the first unit member 310.

For example, the battery cells 110 disposed in the central region in the cell-stacking direction, such as in the area indicated by J6, may come into entire contact with the first unit member 310 in the longitudinal direction (Y-axis direction). On the other hand, the battery cells 110 disposed on the outer side in the cell-stacking direction, such as in the area indicated by J7, may come into contact with the first unit member 310 only in the central portion in the longitudinal direction, and may come into contact with the second unit member 320 in the longitudinal end portions. In particular, the outermost cell is included in the area J7, and the outermost cell may come into contact with the first unit member 310 in the central portion, and may come into contact with the second unit member 320 in the end portions.

Furthermore, in the outer area indicated by J7, the contact area of the first unit member 310 may gradually decrease and the contact area of the second unit member 320 may gradually increase toward the outer side in the cell-stacking direction.

According to the above-implemented configuration of the present disclosure, since the bonding force is provided by the first unit member 310 to all the battery cells 110, the structural rigidity and structural stability of the entire cell assembly 100 may be improved. In particular, since the outermost cell is also partially bonded, the overall structure of the cell assembly 100 may be prevented from being distorted by vibration or swelling. However, the battery cells 110, including the outermost cell, located on the outer side may come into contact with the second unit member 320 with a lower bonding force in the longitudinal end portions, so that partial movement may be allowed during swelling. Therefore, the problem in which the longitudinal end portion of the battery cell, especially the pouch-type cell, is easily damaged may be prevented. Furthermore, in the embodiment shown in FIG. 19, the outermost cell, among all the battery cells 110 included in the cell assembly 100, may have the maximum contact area with the second unit member 320. Therefore, the possibility of damage to the outermost cell due to swelling may be more reliably reduced.

In addition, as shown in the embodiments in FIGS. 16, 18, and 19, in the case where the boundary between the first unit member 310 and/or the second unit member 320 is configured in an oblique or curved line, it is easier to obtain the configuration in which the bonding force of the thermally conductive member 300 gradually changes along the cell-stacking direction. In particular, in order to gradually change the bonding force depending on the position of the thermally conductive member 300, a process is required to sequentially change the composition of the thermally conductive member 300 across the positions or to diversely arrange various types of thermally conductive materials having different compositions depending on the positions, but such a process is not easy to perform. However, according to the above-implemented configuration, a gradual change in the bonding force depending on the position of the thermally conductive member 300 may be easily implemented without performing a complex process.

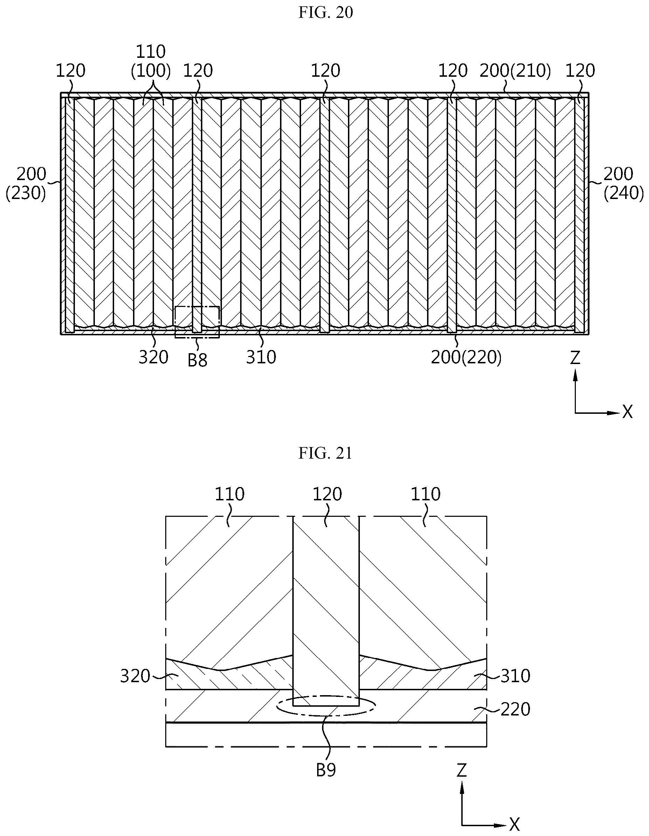

FIG. 20 is a cross-sectional view of a battery module according to another embodiment of the present disclosure. For example, FIG. 20 may show a modification of the embodiment in FIG. 3. In addition, FIG. 21 is an enlarged view of the part B8 in FIG. 20.

Referring to FIG. 20 and FIG. 21, the cell assembly 100 may further include a barrier 120 in addition to the battery cell 110. One or more barriers 120, particularly multiple barriers 120, may be provided in one cell assembly 100. Furthermore, the barrier 120 may be disposed between adjacent battery cells 110 in the cell assembly 100, or may be disposed at the outermost side of the cell assembly 100 in the stacking direction. The barrier 120 may be configured in the form of a plate and may come into contact with the surface of the battery cell 110, particularly the outer surface of the storage portion of the pouch-type cell. Furthermore, the barrier 120 may be attached to the outer surface of the storage portion of the pouch-type cell.

The barrier 120 may be configured to absorb swelling of the cell assembly 100. To this end, the barrier 120 may be provided with an elastic material such as urethane or rubber. In particular, the barrier 120 may absorb swelling of the central portion in the height direction (Z-axis direction) well for a plurality of stacked battery cells 110.

In addition, the barrier 120 may be configured to block heat and/or flame between adjacent battery cells 110 in the cell assembly 100. To this end, the barrier 120 may be provided with a material such as silicon, mica, GFRP (Glass Fiber Reinforced Plastic), or CFRP (Carbon Fiber Reinforced Plastic).

In addition, the barrier 120 may be configured to perform various other functions, and may include various other materials.

In the above-implemented configuration, the barrier 120 may be disposed at the boundary of portions having different bonding forces. For example, referring to the configuration in FIG. 20, the battery module may include a first unit member 310 and a second unit member 320, as heterogeneous thermally conductive unit members, having different bonding forces. In this case, the barrier 120 may be interposed between the first unit member 310 and the second unit member 320 in the cell-stacking direction (X-axis direction), as illustrated in FIG. 21. That is, the barrier 120 may be a boundary between the first unit member 310 and the second unit member 320.

In particular, the first unit member 310 and the second unit member 320 in a fluid state may be applied, as thermally conductive pastes, to the inner surface of the module case 200. In this case, the barrier 120 may cause different types of thermally conductive pastes to remain only in designated sections and prevent them from flowing to other unintended sections. Therefore, according to this implemented configuration, the bonding force of the thermally conductive member 300 may be accurately distributed according to a preset design.

Furthermore, the barrier 120 may have its end inserted into the module case 200. For example, as in the portion indicated by B9 in FIG. 21, a concave groove may be formed in a downward direction on the inner surface (upper surface) of the lower plate 220, and the lower end of the barrier 120 may be inserted into the groove. In this case, the partition performance of the barrier 120 between the first unit member 310 and the second unit member 320 may be further improved. In addition, since the position of the barrier 120 is maintained inside the battery module, the barrier 120 may also play a role of absorbing the swelling of the cell assembly 100. In addition, in this case, the structural stability and assembling of the battery module may also be improved.

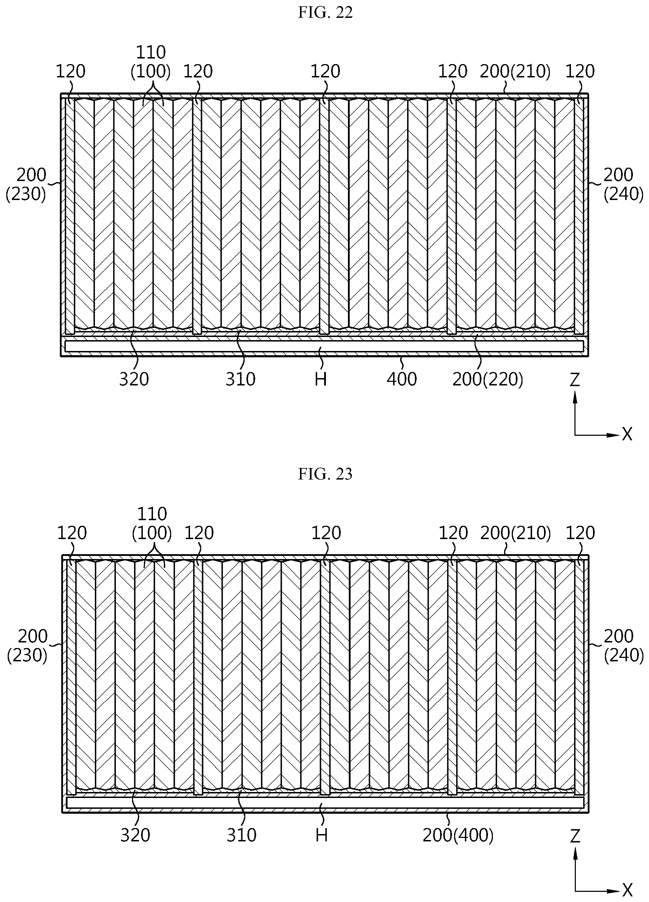

FIG. 22 is a cross-sectional view of a battery module according to another embodiment of the present disclosure. For example, FIG. 22 may show another modification of the embodiment in FIG. 3.

Referring to FIG. 22, a battery module according to the present disclosure may further include a cooling member 400. The cooling member 400 may be configured such that coolant is able to flow therethrough. For example, the cooling member 400 may have a hollow space formed therein, as indicated by H in FIG. 22, to provide a cooling path. In addition, the coolant may flow through this cooling path H. Here, the coolant may include not only a cooling liquid such as cooling water, but also a cooling gas. The cooling member 400 may be expressed as other terms, such as a heat sink, or may be implemented in other structures.

The cooling member 400 may be provided on the side where the thermally conductive member 300 is located. That is, the thermally conductive member 300 may be provided on the side where the cooling member 400 is located. For example, the cooling member 400 may be provided at the bottom of the battery module as shown in FIG. 22, and in this case, the thermally conductive member 300 may also be provided at the bottom of the cell assembly 100.

The cooling member 400 may be provided outside the module case 200. For example, the cooling member 400 may be provided on the lower outside of the module case 200 as shown in FIG. 22. However, the position of the cooling member 400 may be configured in various ways.

FIG. 23 is a cross-sectional view of a battery module according to another embodiment of the present disclosure.

Referring to FIG. 23, the cooling member 400 may be provided inside the module case 200. For example, a hollow space may be formed in the lower plate 220 of the module case 200, and the coolant may flow through this hollow space. In this case, the hollow space formed in the module case 200 functions as a cooling path H.

In this implemented configuration, the cooling member 400 may be integrated into at least a part of the module case 200. That is, the module case 200 may be configured to have a cooling function or cooling configuration provided therein. In this implemented configuration, the thermally conductive member 300 may come into direct contact with the module case 200 and discharge heat through the cooling path H, so that the cooling performance of the battery module may be further improved.

Meanwhile, although the previous drawings described above have shown that the battery cell 110 included in the cell assembly 100 is a pouch-type cell, the battery cell 110 may be a cylindrical cell or a prismatic cell.

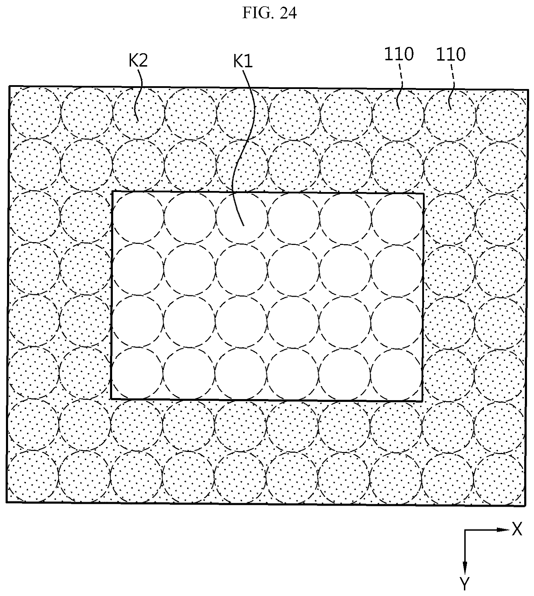

FIG. 24 is a bottom view schematically illustrating a configuration in which a plurality of cylindrical cells are stacked on each other in a cell assembly 100 of a battery module according to another embodiment of the present disclosure

Referring to FIG. 24, a cell assembly 100 may be configured such that a plurality of cylindrical cells, as battery cells 110, are stacked in two or more directions on the X-Y plane. In addition, a thermally conductive member 300 may be provided on the bottom of the stack of cylindrical cells to provide a bonding force that varies across the portions. For example, in a cell assembly 100 in which a plurality of cylindrical cells 110 are stacked in the left-right direction (X-axis direction) and front-back direction (Y-axis direction), the bonding force of the thermally conductive member 300 may be configured to differ between the cylindrical cells disposed relatively inward, such as in a region K1, and the cylindrical cells disposed relatively outward, such as in a region K2.

For example, a first unit member 310 may be disposed in the region K1, and a second unit member 320 may be disposed in the region K2. In this case, the second unit member 320 may be configured to have a lower bonding force than the first unit member 310. As a more specific example, the second unit member 320 may be a non-curing adhesive, and the first unit member 310 may be a curing adhesive.

According to this implemented configuration, when swelling occurs in the cell assembly 100, the cylindrical cell located on the outer side may be movable to a certain extent, thereby preventing the overall structure of the cell assembly 100 from collapsing due to accumulation of the swelling pressure on the outer cell. In particular, potting resin may be applied as the thermally conductive member 300, and according to the above-implemented configuration, damage to the cured resin by swelling and structural collapse according thereto may be prevented.

Furthermore, the second unit member 320 having a lower bonding force may be configured in the form of a ring surrounding the first unit member 310 having a high bonding force. For example, the second unit member 320 may be formed in a square ring, such as the portion indicated by K2 in FIG. 24. In this case, in the cell assembly 100 in which a plurality of battery cells 110 are stacked in two or more directions, the second unit member 320 may be disposed in the battery cells 110 located on the outer side. In particular, the second unit member 320 may be applied at least to the side of the outermost battery cell 110.

The direction in which the cylindrical cell expands due to swelling may not be limited to a specific direction. However, according to the above-implemented configuration, regardless of the direction of the pressure due to the swelling of the cell assembly 100, the second unit member 320 may be provided in the cylindrical cell disposed outward in the corresponding direction. Therefore, regardless of the swelling direction, damage to the battery cell 110 or structural collapse of the cell assembly 100 may be prevented.

Meanwhile, although the various drawings of this specification have shown the configuration in which the thermally conductive member 300 is located at the bottom of the battery module, the thermally conductive member 300 may be located on another side, such as the top of the battery module. In addition, the thermally conductive member 300 may be located on two or more sides of the battery module. For example, the thermally conductive member 300 may be applied to the top and bottom of the cell assembly 100, respectively.

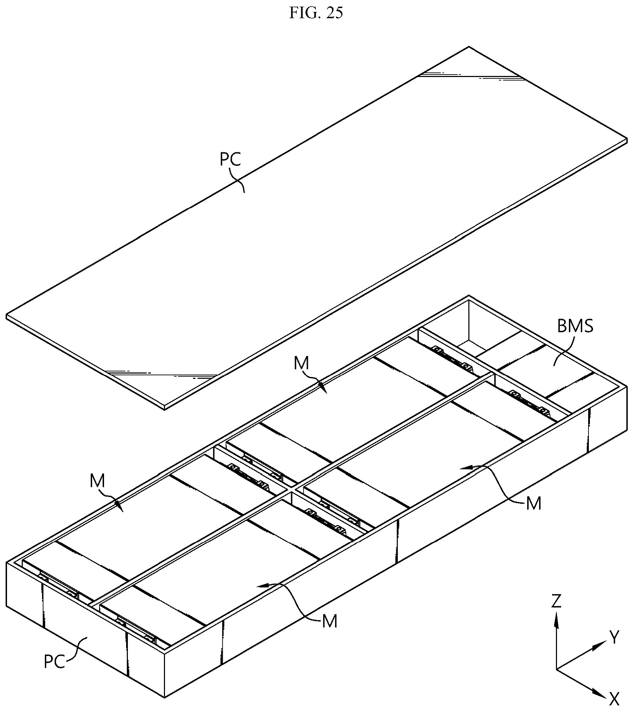

FIG. 25 is a perspective view schematically illustrating the configuration of a battery pack according to an embodiment of the present disclosure.

Referring to FIG. 25, a battery pack according to the present disclosure may include one or more battery modules according to the present disclosure, as indicated by M. In addition, the battery pack according to the present disclosure may further include various components in addition to the battery module M of the present disclosure. For example, the battery pack according to the present disclosure may further include components of the battery pack, which are known at the time of filing the present disclosure, such as a BMS (Battery Management System), a bus-bar, a relay, a current sensor, and the like.

In addition, the battery pack according to the present disclosure may further include a pack case as indicated by PC in FIG. 25. This pack case PC may provide a space to store the battery module according to the present disclosure. In particular, in the case where the battery pack includes multiple battery modules, the pack case PC may be partitioned into spaces for dividing and storing multiple battery modules using cross-beams and the like.

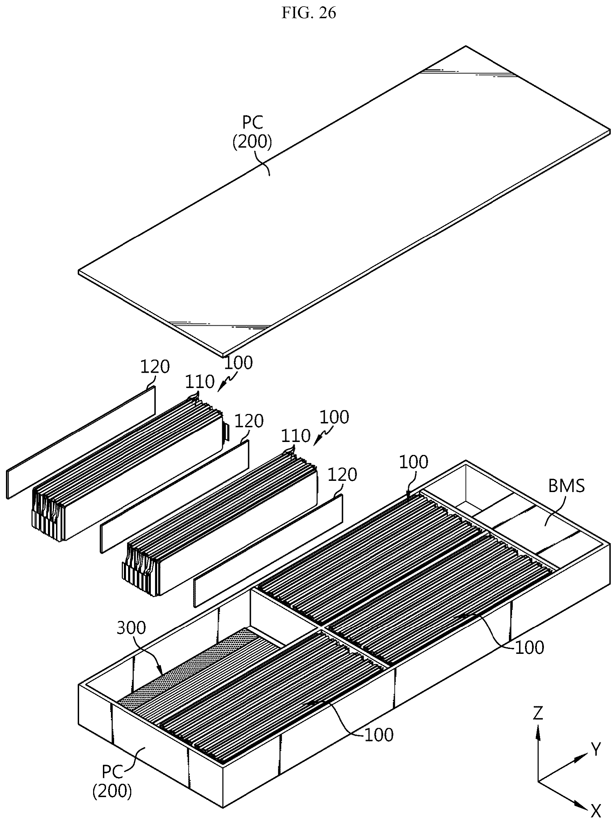

FIG. 26 is a perspective view schematically illustrating the configuration of a battery pack according to another embodiment of the present disclosure.

Referring to FIG. 26, a battery pack according to the present disclosure may include a battery module according to the present disclosure, and may be configured so that the module case 200 of the battery module functions as a pack case PC, instead of including a separate pack case. In this case, components of the battery pack, such as a BMS, a bus-bar, and a relay, may be stored inside the module case 200. This type of battery pack is also called a cell-to-pack (CTP) type in which the battery cells 110 are directly stored in the pack case PC. Recently, development of such CTP-type battery packs has also been active, and the present disclosure may also be applied to such CTP-type battery packs. In particular, the inner surface, for example, the bottom surface, of a housing, which is the pack case PC or the module case 200, may be provided with a thermally conductive member 300 with different bonding forces, thereby securing stability against swelling. In addition, the plurality of battery cells 110 may directly transfer heat to the pack case PC through the thermally conductive member 300, thereby further improving the cooling performance.

The battery module or battery pack according to the present disclosure may be applied to a vehicle such as an electric vehicle or a hybrid vehicle. That is, the vehicle according to the present disclosure may include the battery module according to the present disclosure or the battery pack according to the present disclosure. In addition, the vehicle according to the present disclosure may further include various other components included in the vehicle, in addition to the battery module or battery pack. For example, the vehicle according to the present disclosure may further include a car body, a motor, a control device such as an ECU (electronic control unit), and the like, in addition to the battery module according to the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

[Description of Reference numerals]

100: Cell assembly
110: Battery cell
111: Electrode lead
120: Barrier
200: Module case
210: Top plate, 220: Bottom plate, 230: Left plate,
240: Right plate, 250: Front plate, 260: Back plate
300: Thermally conductive member
310: First unit member, 320: Second unit member,
330: Third unit member
400: Cooling member
P1: Separation protrusion
H: Cooling path
M: Battery module
PC: Pack case

**Claims**

1. A battery module comprising:

   a cell assembly having a plurality of battery cells stacked in at least one direction;
   a module case configured to accommodate the cell assembly in an inner space; and
   a thermally conductive member interposed between the cell assembly and the module case, and configured to transfer heat and have a bonding force that varies across portions.

2. The battery module according to claim 1, wherein the thermally conductive member is interposed between all the battery cells provided in the cell assembly and the module case.

3. The battery module according to claim 1, wherein the thermally conductive member has a portion having a bonding force that differs along a stacking direction of the plurality of battery cells.

4. The battery module according to claim 3, wherein the thermally conductive member is configured, at least in part, such that a portion located on an outer side in the stacking direction of the plurality of battery cells has a lower bonding force than a portion located on an inner side.

5. The battery module according to claim 4, wherein the thermally conductive member is configured such that a portion where an outermost battery cell is located in the cell assembly has a lowest bonding force.

6. The battery module according to claim 1,

   wherein the thermally conductive member comprises two or more thermally conductive unit members having different bonding forces, and

   wherein the two or more thermally conductive unit members are disposed along a stacking direction of the cell assembly.

7. The battery module according to claim 1, wherein the thermally conductive member is configured to have a degree of curing that differs across portions.

8. The battery module according to claim 7, wherein the thermally conductive member comprises a curing thermally conductive part and a non-curing thermally conductive part.

9. The battery module according to claim 1, wherein the thermally conductive member is configured to have a bonding force that varies in two or more directions.

10. The battery module according to claim 9, wherein the thermally conductive member has a portion having a bonding force that varies in both a stacking direction of the plurality of battery cells provided in the cell assembly and a longitudinal direction of each battery cell.

11. The battery module according to claim 10, wherein the thermally conductive member is configured to have a lower bonding force in a longitudinal end portion of the battery cell than in a central portion.

12. The battery module according to claim 1,

   wherein the thermally conductive member comprises a central member and an outer member having a lower bonding force than the central member and located further outward than the central member in a stacking direction of the cell assembly, and
   wherein the outer member has a width that differs across portions in the stacking direction of the cell assembly.

13. The battery module according to claim 12, wherein the central member has a portion whose width gradually changes in the stacking direction of the cell assembly.

14. The battery module according to claim 1, further comprising a cooling member provided outside or inside the module case and configured to allow coolant to move therethrough.

15. A battery pack comprising a battery module according to any one of claims 1 to 14.

16. A vehicle comprising a battery module according to any one of claims 1 to 14.

FIG. 1

FIG. 2

FIG. 3

110
(BCL)

110
(100)

110
(100)

200(210)

110
(BCR)

200
(230)

200
(240)

B2

300

B1

300

200(220)

B2'

Z

X

FIG. 4

110

300

200
(220)

Z

X

FIG. 5

FIG. 6

FIG. 7

FIG. 8

FIG. 9

FIG. 10

FIG. 11

FIG. 12

FIG. 13

110(C1)   110(C2)

310

320

X

Y

FIG. 14

110(C3)

320

310

X

Y

FIG. 15

FIG. 16

FIG. 17

FIG. 18

FIG. 19

FIG. 20

FIG. 21

FIG. 22

FIG. 23

FIG. 24

FIG. 25

FIG. 26

## INTERNATIONAL SEARCH REPORT

| International application No. |
|---|
| **PCT/KR2024/018099** |

| A. | CLASSIFICATION OF SUBJECT MATTER |
|---|---|
| | **H01M 10/6551**(2014.01)i; **H01M 10/6556**(2014.01)i; **H01M 10/625**(2014.01)i; **H01M 50/211**(2021.01)i |

According to International Patent Classification (IPC) or to both national classification and IPC

| B. | FIELDS SEARCHED |
|---|---|

Minimum documentation searched (classification system followed by classification symbols)

H01M 10/6551(2014.01); H01M 2/10(2006.01); H01M 50/20(2021.01); H01M 50/204(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 모듈(battery module), 접착력(adhesion), 차이(difference), 열전도(thermal conductivity)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0114206 A (PRIME PLANET ENERGY & SOLUTIONS, INC.) 01 August 2023 (2023-08-01)<br>See paragraphs [0025]-[0062] and figures 1-8. | 1-16 |
| A | KR 10-2022-0039619 A (LG ENERGY SOLUTION, LTD.) 29 March 2022 (2022-03-29)<br>See claims 1-4 and figures 1-4. | 1-16 |
| A | KR 10-2022-0025419 A (LG ENERGY SOLUTION, LTD.) 03 March 2022 (2022-03-03)<br>See claims 1-4 and figures 4-7. | 1-16 |
| A | KR 10-2021-0094924 A (LG ENERGY SOLUTION, LTD.) 30 July 2021 (2021-07-30)<br>See claim 1 and figures 1-8. | 1-16 |
| A | WO 2020-152857 A1 (KABUSHIKI KAISHA TOSHIBA) 30 July 2020 (2020-07-30)<br>See paragraph [0049] and figure 5. | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 February 2025** | **19 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/018099**

| Patent document cited in search report | | | Publication date (day/month/year) | Patent family member(s) | | | Publication date (day/month/year) |
|---|---|---|---|---|---|---|---|
| KR | 10-2023-0114206 | A | 01 August 2023 | CN | 116487803 | A | 25 July 2023 |
| | | | | EP | 4216339 | A1 | 26 July 2023 |
| | | | | JP | 2023-107493 | A | 03 August 2023 |
| | | | | JP | 7624419 | B2 | 30 January 2025 |
| | | | | US | 2023-0238639 | A1 | 27 July 2023 |
| KR | 10-2022-0039619 | A | 29 March 2022 | CN | 115298885 | A | 04 November 2022 |
| | | | | CN | 115298885 | B | 26 January 2024 |
| | | | | EP | 4135108 | A1 | 15 February 2023 |
| | | | | JP | 2023-523207 | A | 02 June 2023 |
| | | | | JP | 7507880 | B2 | 28 June 2024 |
| | | | | US | 2023-0207941 | A1 | 29 June 2023 |
| | | | | WO | 2022-065841 | A1 | 31 March 2022 |
| KR | 10-2022-0025419 | A | 03 March 2022 | | None | | |
| KR | 10-2021-0094924 | A | 30 July 2021 | CN | 113853708 | A | 28 December 2021 |
| | | | | CN | 113853708 | B | 02 August 2024 |
| | | | | EP | 3952012 | A1 | 09 February 2022 |
| | | | | JP | 2022-522096 | A | 14 April 2022 |
| | | | | JP | 7262592 | B2 | 21 April 2023 |
| | | | | US | 2022-0093986 | A1 | 24 March 2022 |
| | | | | WO | 2021-149903 | A1 | 29 July 2021 |
| WO | 2020-152857 | A1 | 30 July 2020 | CN | 113228389 | A | 06 August 2021 |
| | | | | CN | 113228389 | B | 23 May 2023 |
| | | | | JP | 7186802 | B2 | 09 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230161479